(19) Europäisches Patentamt European Patent Office Office européen des brevets

(11) **EP 4 440 029 A1**

(12) **EUROPEAN PATENT APPLICATION**

(43) Date of publication:
**02.10.2024 Bulletin 2024/40**

(21) Application number: **23164771.0**

(22) Date of filing: **28.03.2023**

(51) International Patent Classification (IPC):
*H04L 9/08* *(2006.01)*     *H04L 9/32* *(2006.01)*

(52) Cooperative Patent Classification (CPC):
**H04L 9/0894; H04L 9/0872; H04L 9/3228; H04L 9/3297**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mastercard International Incorporated Purchase, NY 10577 (US)**

(72) Inventor: **COLLINGE, Mehdi**
**7141 Hainaut (BE)**

(74) Representative: **Keltie LLP**
**No. 1 London Bridge**
**London SE1 9BA (GB)**

(54) **CRYPTOGRAPHIC SERVICE PROVISION**

(57)     A method of providing a secure service at a computing node for a requesting party external to the computing node is described. This computing node is one of a plurality of computing nodes in a distributed computing system adapted to provide the secure service. The method comprises the following steps carried out at the computing node. A service request is received from a requesting party, wherein the service request comprises a request to generate a credential. The credential is then generated using a cryptographic key and an instance counter, wherein the cryptographic key is determined from a currently active key list of cryptographic keys for use by the computing node, wherein key lists are rotated to provide a new currently active key list at a predetermined rotation frequency, and wherein the instance counter is determined by a number of instances of performing the service within a predetermined time window. The credential is provided such that a key list reference and an instance counter value can be determined from the credential without decryption. However, the credential further comprises a key list enhancement, such that the key list enhancement is used to prevent clash between credentials having a common key list reference and a common instance counter value. A complementary method of validating such a credential is also described, together with computing apparatus adapted to perform such methods.

Figure 4

## Description

Field of Disclosure

The present disclosure relates to cryptographic service provision.

Background to Disclosure

There are multiple technical challenges with requiring a centralized system to provide services to an exceptionally large number of clients, particularly when these are widely geographically distributed. It is logical to consider distributing the system so that the relevant services can be provided by a set of geographically distributed servers, rather than one central server or data centre.

Such decentralisation may use any suitable architecture using geographically distributed servers - or data centres - to deliver services to clients (this may be public cloud, private cloud, or simply a private distributed system). The architecture may be considered as comprising a number of nodes - when using such a distributed architecture, a node may be an aggregation of a number of computers and may cover more than one data centre with "real-time" connectivity and data sharing within a given node.

Decentralisation may itself be problematic, particularly if different service instances need to relate to each other in some way - for example, if a service needs to establish details of how a past service has been performed. This may require, for example other clients (or other system nodes) need to refer back to the service providing node or otherwise understand how, the service providing node performed that service. In a transaction system - where a credential is typically generated and then validated in the authorisation of a transaction, validation of a credential will typically require such information concerning the generation of the credential. WO2020/247092A1 teaches an approach which addresses many of these issues - credentials are generated and validated using a key list which is rotated on a regular basis, and transactions are identified using transaction counters associated with the credential generation process.

The approach taught in WO2020/247092A1 prevents an explosive increase in messaging and overall demand on infrastructure with increased transaction volume. There are still however many practical challenges to address, in particular in ensuring that cryptographic services are provisioned with the correct data at the correct time to perform as intended. One such challenge is to ensure that all credentials that are generated can be validated if the appropriate conditions for validation exist. The re-use of the references to key list and of transaction counters (typically reset after a period of time) is necessary to prevent increased system demand, but it may also lead to a risk of re-use of a particular reference to a key list and its associated unique key list in such a way that it may have a different effective meaning from the point of view of the entity in charge of generation compared to the entity in charge of validation subsequently using that reference as a means to identify the key list to be used, with the potential to affect credential validation as a result. It would be desirable to address this issue.

Summary of Disclosure

In a first aspect, the disclosure provides a method of providing a secure service at a computing node for a requesting party external to the computing node, wherein the computing node is one of a plurality of computing nodes in a distributed computing system adapted to provide the secure service, the method comprising at the computing node: receiving a service request from a requesting party, wherein the service request comprises a request to generate a credential; generating the credential using a cryptographic key and an instance counter, wherein the cryptographic key is determined from a currently active key list of cryptographic keys for use by the computing node, wherein key lists are rotated to provide a new currently active key list at a predetermined rotation frequency, and wherein the instance counter is determined by a number of instances of performing the service within a predetermined time window; wherein the credential is provided such that a key list reference and an instance counter value can be determined from the credential without decryption; and wherein the credential further comprises a key list enhancement, such that the key list enhancement is used to prevent clash between credentials having a common key list reference and a common instance counter value.

In a second aspect, the disclosure provides a method of providing a secure service at a computing node for a requesting party external to the computing node, wherein the computing node is one of a plurality of computing nodes adapted to provide the secure service, the method comprising at the computing node: receiving a service request from a requesting party, wherein the service request comprises a request to validate a credential, wherein the credential has been generated using a cryptographic key and an instance counter by one of the computing nodes of the plurality of computing nodes, wherein the cryptographic key has been determined from a then currently active key list of cryptographic keys for use by the generating computing node, wherein key lists are rotated to provide a new currently active key list at a predetermined rotation frequency, and wherein the instance counter was determined by a number of instances of performing the credential generating service at the generating computing node within a predetermined time window; wherein the credential is provided such that a key list reference and an instance counter value can be determined from the credential without decryption, and where the credential further comprises a key list enhancement to prevent clash between credentials having a common key list reference and a common instance counter value; determining from at least the key list reference and the key list enhancement whether validation of the credential is legitimate, and if so, attempting to validate the credential.

Using a key list enhancement in the manner indicated allows the problem of a recurring key list reference leading to mismatches between generation and validation results to be managed effectively, and in most contexts, eliminated for practical purposes.

The following features are applicable to both the first and second aspects of the disclosure.

In embodiments, the key list enhancement may provide an extension to the key list reference, thereby extending the time for a key list reference to recur on rotation at the predetermined rotation frequency.

In embodiments, the key list enhancement may comprise an extra field to check whether the key list reference relates to a usage of the relevant key list currently available for validation. If so, the key list enhancement may comprise a time, such as an indication of a month of generation of the credential, or possibly an indication of a week of generation of the credential. The predetermined rotation frequency of key list references may be weekly.

In a third aspect, the disclosure provides computing apparatus adapted to act as a computing node providing a secure service, the computing apparatus comprising a processor, a memory, and means for communicating over a network, wherein the memory comprises instructions to program the processor to perform the method of the first or second aspect using the means for communicating over a network.

In embodiments, the computing apparatus is adapted to perform both the method of the first aspect and the second aspect.

In a fourth aspect, a distributed computing system comprising a plurality of instances of computing apparatus in accordance with the third aspect, each such computing apparatus acting as a computing node for providing a secure service as part of the distributed computing system.

Description of Specific Embodiments

Specific embodiments of the disclosure are now described, by way of example, with reference to the accompanying drawings, of which:

Figure 1 shows multiple clients interacting with a central server;

Figure 2 shows multiple clients interacting with a distributed computing architecture providing the same services as the central server of Figure 1;

Figure 3 shows operation of a distributed system such as that shown in Figure 2 where distributed nodes provide a cryptographic service involving creation and validation of proofs using a limited number of cryptographic keys, and illustrates a potential problem in relation to key list references;

Figure 4 shows a solution to the potential problem indicated in Figure 3 according to an embodiment of the disclosure;

Figure 5 shows schematically a distributed transaction architecture using a four-party model;

Figure 6 illustrates elements of a complex distributed system adapted to implement the transaction architecture of Figure 5;

Figure 7 shows schematically an exemplary system for enabling digital transactions in the transaction architecture of Figures 5 and 6;

Figure 8 illustrates schematically an arrangement for a distributed system for digital enablement of transactions;

Figure 9 illustrates a computing node of the arrangement of Figure 8 in more detail;

Figure 10 illustrates elements within the computing node of Figure 9;

Figure 11 indicates transaction flow in relation to operations performed by the node of Figure 9;

Figure 12 indicates use of tokenization in an embodiment of the arrangement of Figures 9 to 11;

Figure 13 indicates an approach to key management used in the arrangement of Figures 8 to 12;

Figure 14 illustrates an exemplary approach to transaction identification;

Figure 15 illustrates an exemplary set of cryptographic mechanisms for use for digitized transactions in the arrangement of Figures 8 to 14;

Figure 16 illustrates a global model of key management with individual modes managed as shown in Figure 13;

Figure 17 illustrates a global model of monitoring associated with the key management model of Figures 13 and 16;

Figure 18 illustrates a UCAF format (UCAF Format 6) particularly suitable for communication of credentials for certain forms of digital transaction with an exemplary node of the type shown in Figure 9;

Figure 19 shows different routes that a digital transaction may take, and provides context for embodiments of the disclosure;

Figure 20 provides a UCAF format (UCAF Format 5) used for communication of credentials for certain forms of digital transaction with an exemplary node of the type shown in Figure 9;

Figure 21 is a table illustrating code provision using the UCAF format of Figure 20;

Figures 22 and 23 illustrate alternative headers for use in embodiments of the disclosure for the UCAF format of Figure 20 for use with clear and encrypted main parts of the UCAF respectively;

Figures 24 and 25 illustrate respectively clear and encrypted main parts for embodiments of the disclosure for the UCAF format of Figure 20 replicating UCAF Formats 0 and 0+;

Figures 26 and 27 illustrate respectively clear and encrypted main parts for embodiments of the disclosure for the UCAF format of Figure 20 replicating UCAF Formats 3 and 3+;

Figures 28 and 29 illustrate respectively clear and encrypted main parts for embodiments of the disclosure for the UCAF format of Figure 20 in a native UCAF Format 5;

Figure 30 summarises issues relating to key list rotation and counter management for nodes of the type shown in Figure 9;

Figure 31 indicates the problem of Figure 30 in the case of UCAF Format 6, and Figure 32 indicates a solution according to an embodiment of the disclosure; and

Figure 33 indicates the problem of Figure 30 in the case of UCAF Format 6, and Figure 34 indicates a solution according to an embodiment of the disclosure

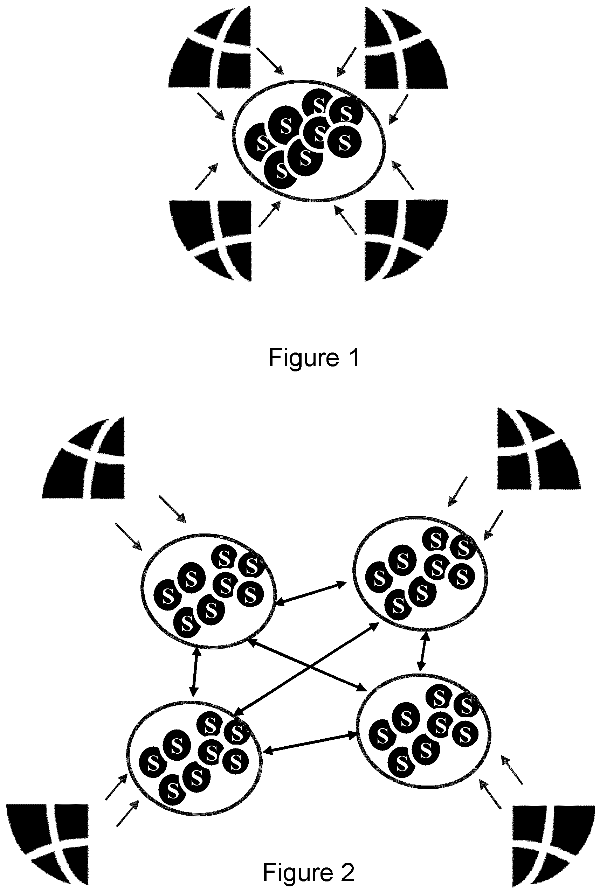

In general terms, the context of the disclosure is illustrated in Figures 1 to 3. Figure 1 shows a central system performing functions in response to requests from a very large number of geographically distributed entities. This places intense demand on the central system in relation to processing capability, storage and messaging, and will typically lead to significant load on the system overall because of bottlenecks and messaging requirements. This is in addition to the problem of network latency resulting from travel time when a request is coming from a geographically distant requester communicating with a centralized system.

Figure 2 shows an alternative arrangement in which the role of the central system is replicated so that the same functions are performed by a distributed set of nodes, each with the capability to perform some or all of the functions provided by the central system. Individual nodes should see a significantly lower demand than the central system, and as entities should be able to interact with a more local node than the central system, there is potential to reduce network latency. However, as discussed above in general terms, and below with specific relevance to a transaction processing system, there are significant technical challenges in achieving this benefit - in particular, there would for straightforward replication be a need to distribute all the same information to all the nodes replicating the centralized system, generally making the overall position worse rather than better.

There are particular difficulties where it is necessary for a second user of the system to be satisfied that an action taken by a first user of the system was legitimate. In the Figure 1 case, this is relatively straightforward - as the service is performed centrally and the central system has all information, then if users trust the central system this is typically not problematic. In the Figure 2 case, the first user may have been interacting with one node and the second user may be interacting with another node, in which case the same level of confidence cannot be achieved unless all necessary information is held in common between all the nodes, suitably synchronized, which would defeat the point of disaggregation when replicating a centralized system. If the product of the first service performed by the first user is valuable information - such as the proof of a payment made by the first user to be used by a second user in completing a transaction - then risks of system failure or compromise by, for example, use of a proof at multiple nodes by multiple second users to complete a relevant transaction, need to be addressed.

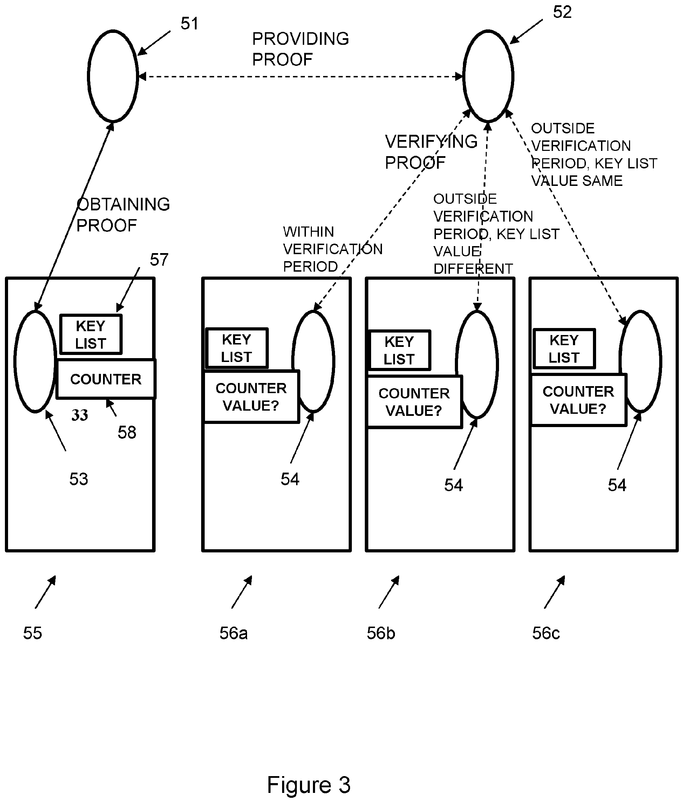

Generally, this situation is shown in Figure 3. A first user 51 requests execution of a first service 53 - in this case, the creation of a credential such as a proof of an event such as a payment from a particular account - and a second user 52 requests validation by verification of the proof of this event, for example to determine that a payment is validly made, from a second service 54. The first user 51 has invoked the first service 53 at a first node 55. The second user will typically not have a choice of where to invoke the second service 54 - this may be a matter of geography or other administrative factors - and in particular may not be able to invoke the second service 54 at the first node 55 (though this may be a possibility). In practice, the second service 54 will then be invoked at a further node 56a, 56b, 56c that has sufficient information to achieve the validation process. Here, this involves access to a common set of cryptographic keys (Key List 57) together with the minimal set of information required to regenerate the proof or otherwise determine that the proof is correct, including an instance counter 58.

Situations in which such a proof, or an object claiming to be such a proof, is presented to one or more second services at one or more nodes need to be addressed for such a system to function reliably and securely. To prevent proliferation of keys - which would also result in proliferation of messaging, which would result in the system becoming ineffective - a limited number of key list references 57 are used, and the available keys are rotated on a regular basis, meaning that a key list reference 57 becomes valid, then invalid for an extended period, and then valid again. To prevent multiple validation attempts, the instance counter 58 is used - on a validation attempt, the instance counter value is captured and this is used to prevent further attempts to validate that "instance" from succeeding.

This can lead to erroneous results in the situations illustrated in Figure 3. If verification takes place during the normal period for use of the key list retrieved using the key list reference, as shown at first validation node 56a, the relevant key from the key list is used and the associated instance counter is marked as used - this is the normal working of the system. At a later point, as shown at second validation node 56b, the key list value will be different, and the validation process will fail before the instance counter 58 is considered - this is also normal working of the system. However, the third validation node attempts validation at a still later time, when successive key list rotations mean that the same key list reference as originally used is again the valid reference of the key list. In this case, the validation process will eventually fail, but at a much later stage of the validation process and the instance counter value will by this point be marked as used. This is not problematic for the present validation attempt - which should fail, and does fail - but it is problematic for a "current" generation process that has the same instance counter value as the "old" credential for validation. Validation for the "current" credential should succeed, but it will in fact fail, because the instance counter value has been marked as used as a result of the attempt to validate the "old" credential.

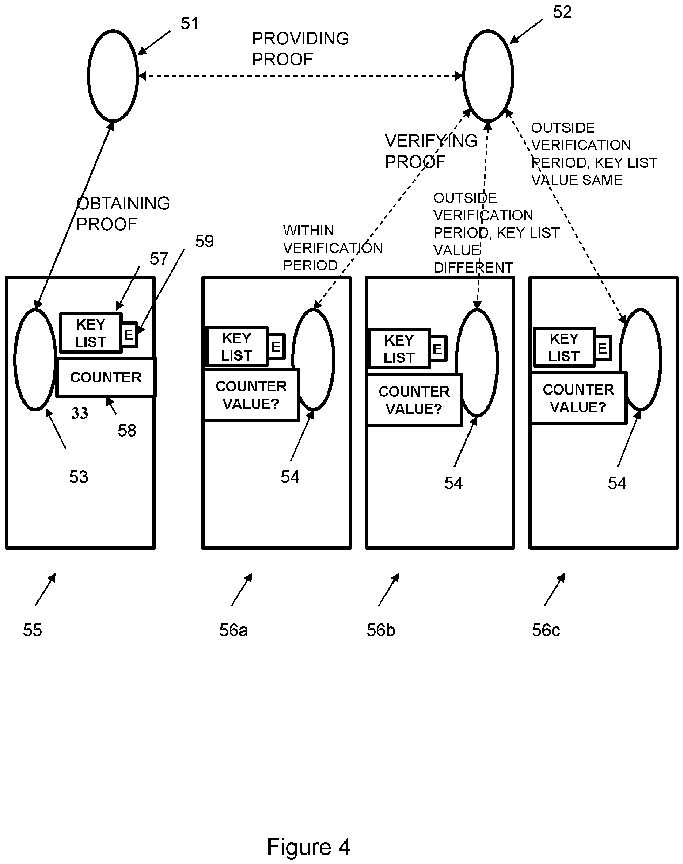

The present disclosure teaches a solution to this issue, shown in Figure 4. This solution involves provision of a key list enhancement 59 to severely reduce or eliminate the risk of the incorrect marking as used of instance counter values for credentials being validated for the first time as a result of an attempt to validate an "old" credential using the same key list. One type of such a key list enhancement 59 may be the provision of additional message space to allow a significantly longer repeat time between usage of the same key list reference, thus significantly reducing risk as the likelihood of attempted validation of "old" credentials will reduce significantly over time. Another type of key list enhancement 59 may be a check factor - an additional factor that must be checked before marking an instance counter value as "used" - this may for example be a date, or a fraction of a date such as a month. Such a check factor may reduce the likelihood of a problematic clash still further, or eliminate it altogether.

This issue is particularly relevant to transaction processing systems, and in particular to systems for handling digital transactions. The number of digital transactions is increasing extremely rapidly, and it is necessary for them to execute reliably and rapidly. Support of these transactions can use transaction processing systems developed for device-based payments using payment cards and use the protocols of such payment systems, but in practice such transactions have a different character from device-based transactions. This is discussed below, first by reference to the general elements of a transaction processing system, and then by a more detailed discussion of the infrastructure used to support digital transactions.

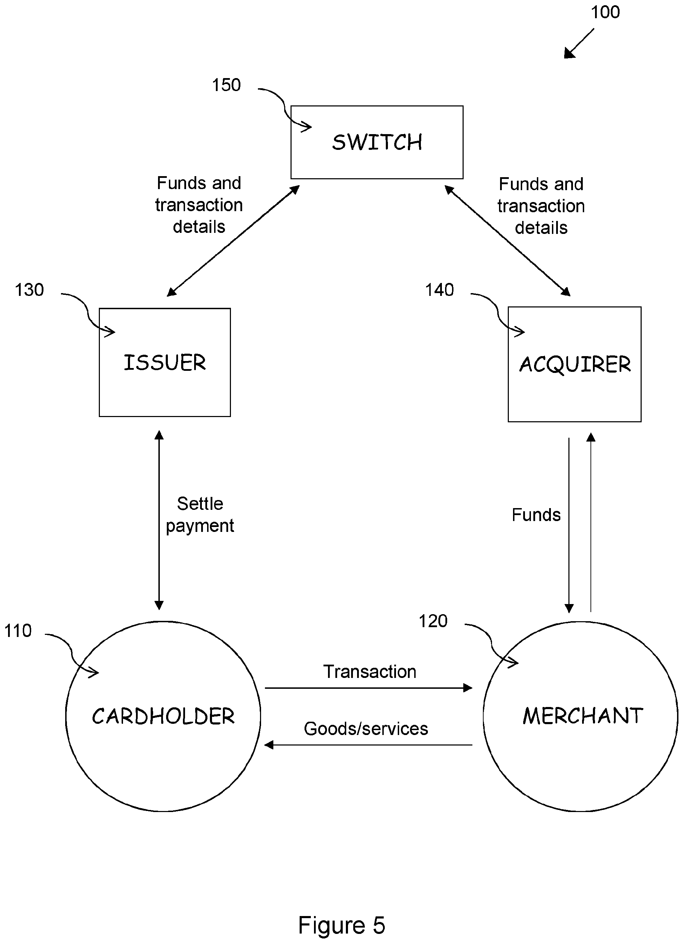

Figure 5 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of an online transaction). Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

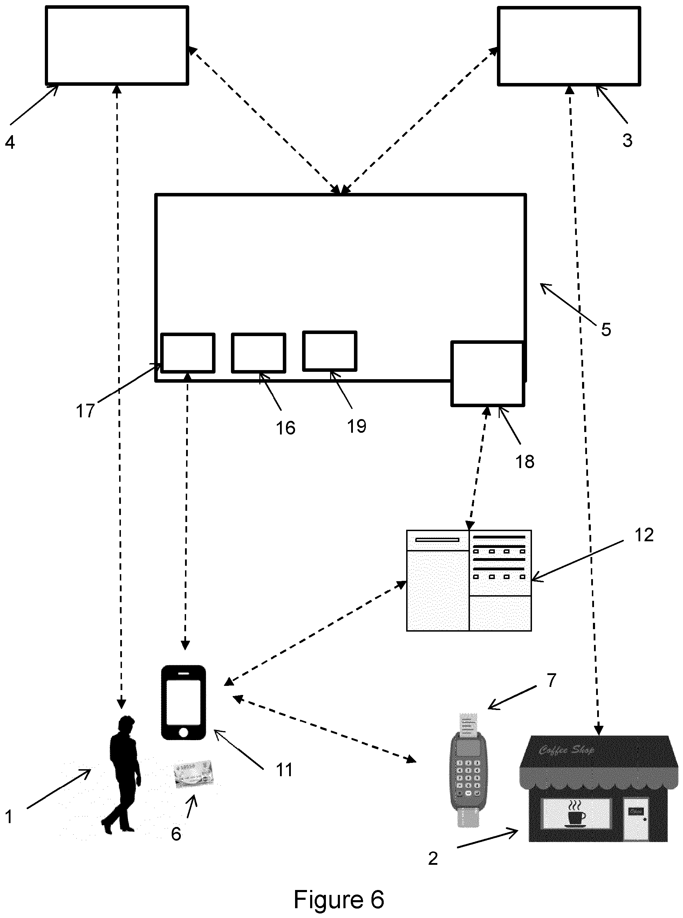

Figure 6 shows an architecture according to an embodiment of the disclosure appropriate for interaction between a cardholder and a merchant. This Figure shows a general-purpose architecture for reference but shows in particular elements of an architecture used when a cardholder carries out an online transaction with a merchant server.

For a conventional transaction, a cardholder will use their payment card 6 - or a mobile computing device such as smartphone 11 adapted for use as a contactless payment device - to transact with a POS terminal 7 of a merchant 2. However, in embodiments relevant to the present disclosure, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smart phone 11 can use this to transact with a merchant POS terminal 7 using NFC or another contactless technology, or to make a payment in association with its wallet service as discussed below. However, online transactions with a merchant are of particular interest in connection with embodiments of the disclosure, rather than contact or contactless transactions with a merchant POS terminal 7. To make an online transaction, the smartphone 11 may also be able to interact with a merchant server 12 representing the merchant 2 over any appropriate network connection, such as the public internet - the connection to the merchant may be provided by an app or application on the computing device.

The transaction scheme infrastructure (transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device, and an internet gateway 18 to accept internet based transactions for processing by the transaction infrastructure. In other embodiments, the wallet service 17 may be provided similarly by a third party with an appropriate trust relationship with the transaction scheme provider. To support tokenization, a token service provider 19 is present (again, this is shown as part of transaction infrastructure 5 but may be provided by a third party with appropriate trust relationships), and the transaction scheme infrastructure provides a digital enablement service 16 to support the performance of tokenized digital transactions, and to interact with other elements of the system to allow transactions to be performed correctly - this digital enablement service may include other elements, such as token service provision.

For a tokenized transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

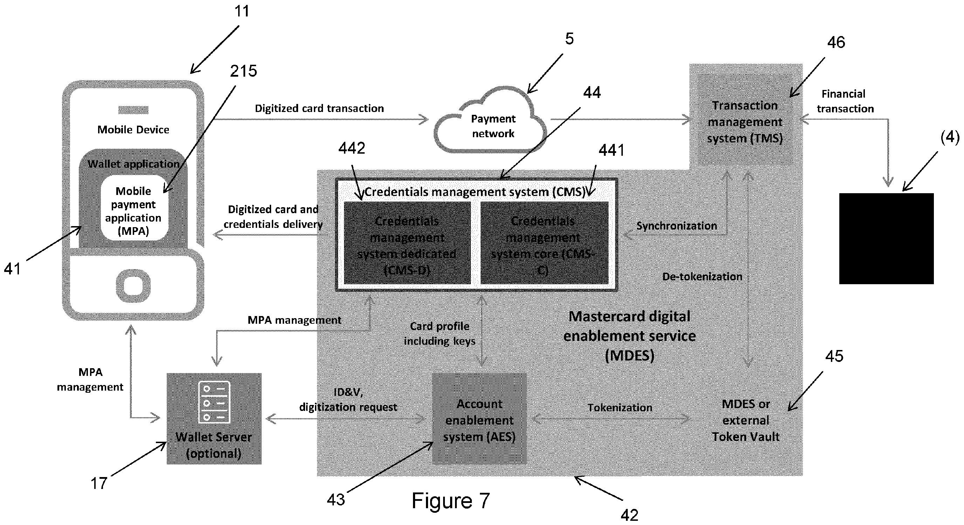

Figure 7 shows elements of a transaction infrastructure to support digitized payments from a mobile device in more detail. This Figure shows as a specific example the applicant's Mastercard Cloud-Based Payment (MCBP) architecture - this is exemplary rather than specific to the disclosure, and illustrates how the architecture is used to support a mobile payment application 215 on a mobile device (such as smartphone 11) - here the mobile payment application 215 is shown as contained within a wallet application or digital wallet 41. Such a digital wallet 41 may communicate with a wallet server 17 to allow management of the mobile payment application, and it also can be used to request digitization of a payment card 6 to be used by the mobile device 11.

The Mastercard Digital Enablement Service (MDES) 42 performs a variety of functions to support mobile payments and digitized transactions. As indicated above, the MDES 42 is exemplary only - other embodiments may use digitization, tokenization and provisioning services associated with other transaction processing infrastructures, for example. The wallet server 17 is not a part of the MDES 42 - and need not be present, for example if the mobile payment application 215 is not embedded within a digital wallet 41 - but acts as an interface between the mobile device 11 and the MDES 42. The MDES 42 also mediates tokenized transactions so that they can be processed through the transaction scheme as for conventional card transactions. The following functional elements shown within the MDES 42: the Account Enablement System (AES) 43, the Credentials Management System (CMS) 44, the Token Vault 45, and the Transaction Management System (TMS) 46. These will be described briefly below.

The Account Enablement System (AES) 43 is used in card digitization and user establishment. It will interact with the mobile payment application (here through the wallet server 17) for card digitization requests, and it will populate the Token Vault 45 on tokenization and will interact with the CMS 44 to establish a card profile with associated keys for digital use of the card.

The Credentials Management System (CMS) 44 supports management of cardholder credentials and is a key system within the MDES 42. The core system 441 manages synchronisation with the transaction system as a whole through interaction with the TMS 46 and manages the channel to the AES 43. The dedicated system 442 provides delivery of necessary elements to the mobile payment application such as the digitized card and credentials and keys in the form needed for use. This system may also interact with the wallet server 17 for management of the mobile payment application.

The Token Vault 45 - which is shown here as within the MDES 42, but which may be a separate element under separate control - is the repository for token information including the correspondence between a token and the associated card. In processing tokenized transactions, the MDES 42 will reference the Token Vault 45, and tokenization of a card will result in creation of a new entry in the Token Vault 45.

Transaction Management System (TMS) 46 is used when processing tokenized transactions. If a transaction is identified by the transaction scheme as being tokenized, it is routed to the TMS 46 which detokenizes the transaction by using the Token Vault 45. The detokenized transaction is then routed to the issuer (here represented by Financial Authorisation System 47) for authorisation in the conventional manner. The TMS 46 also interacts with the CMS 44 to ensure synchronisation in relation to the cardholder account and credentials.

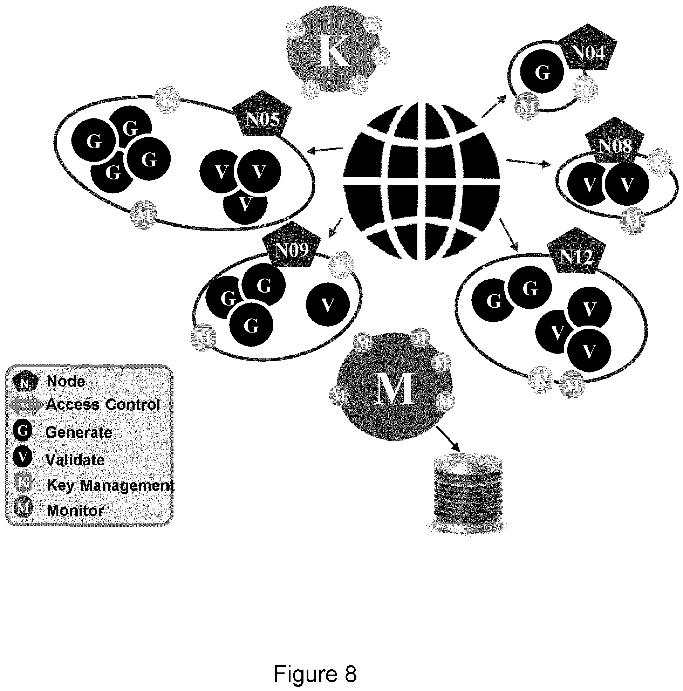

An approach to enabling aspects of a system for the performance of a digitized transaction as shown in Figure 7 - and in particular the management of credentials - to be decentralised is described in the applicant's earlier European Patent Application No. 19178579.9, the contents of which are incorporated by reference to the extent permitted by applicable law. This is done by replacing a central node with a decentralised set of nodes each capable of credential management, as is shown in Figures 8 to 10. This architecture is referred to below as NODES (Network of Distributed E-Commerce Security).

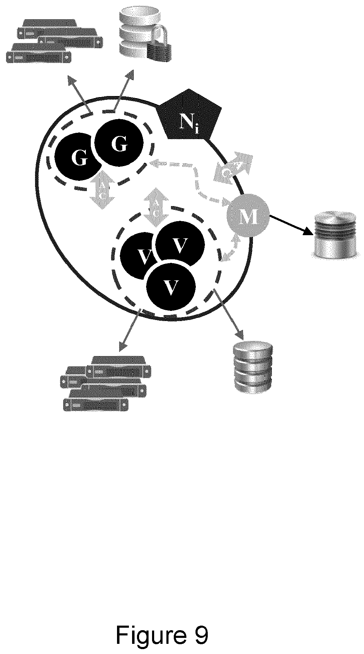

Figure 8 shows a decentralised system of computing nodes Nx, each capable of both generating G and validating V credentials. These credentials can be valid across the whole system (unless restricted to some nodes as result of on-soil regulation or the like), and in this case are associated with transactions for a set of users (clients) whose transactions are routed to that node, typically through geographic proximity. Nodes provide credential generation G and credential validation V as services to clients, and they need to be able to generate the credentials securely and validate them securely while they are valid at least. In the architecture shown, credentials are not stored - they are generated on request and validated on the fly. As Figures 8 and 9 show, in addition to credential generation and validation, key management K and monitoring M can be considered as services both locally at a node and across the system, and access control AC will typically be required to allow access to a service. These aspects will all be described in more detail below.

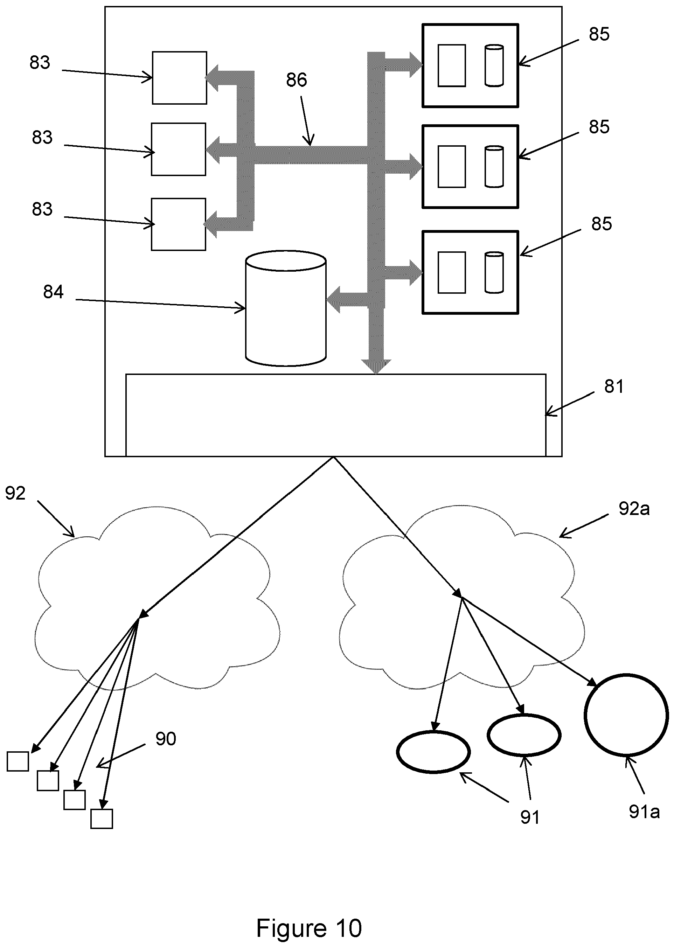

Elements of a suitable computing node are shown in Figure 10. The node 80 comprises at least one networking connection 81 to allow communication to clients 90 and other nodes 91 as well as (in this example) a central node 91a. Communication is shown here as being through separate networks to each set of other parties - through a first network cloud 92 for connection to clients, and a second network cloud 92a for connection to other nodes within the distributed system. This reflects that these networks may be physically different, or that they may have different security requirements and protocols.

The node 80 contains a plurality of conventional servers 83 (which will contain their own processors and memories - not shown - along with other components as would normally be found in a server) and a memory 84 containing a central database. Also comprised within the node 80 are a plurality of hardware security modules 85 (HSMs), adapted to hold cryptographic material in the form of keys needed to perform cryptographic functions and to perform cryptographic functions securely. Here elements within the node 80 are shown communicating by means of a bus 86. While the node 80 in this case is represented as a single data centre, this is not required - the "bus" may be, for example, comprise a dedicated network connection between a group of related data centres that allows them to provide a real-time response such that they will appear to other entities communicating with the node to be part of an integrated whole.

Existing procedures for credential management in payment systems are centralised - any request to create or validate credentials results in a query to a centralised system. For a payment system implementing EMV standards, credentials are generated using keys derived according to a hierarchical process. Issuer Master Keys (IMK) are associated with a specific range of tokens, and keys for use for credentials are derived hierarchically (Card Master Keys - CMK - from IMK, and then Session Keys - SK - from CMK). This approach is used for devices, such as physical cards, but is also used for digital transactions. The number of digital transactions is increasing extremely rapidly, as opposed to device-based interactions where the growth is more consistent with resources.

In the digital ecosystem, while there is very rapidly increasing demand, there is also generally a more secure environment, as the interaction is typically between merchant systems (or payment service providers) and the transaction system over secure pathways between well-identified participants. There are thus interactions that may require multiple cryptographic operations for security in a device context that can be streamlined when delivering services in a server context when exposing API to access the services while keeping all the assets secure in a constrained environment including key management and cryptographic operations.

While it may appear desirable to scale a transaction system for performing digital EMV transactions by using a set of distributed servers to generate and validate credentials, it is found that this approach does not scale. The overall level of key generation would not be changed, but the amount of messaging within the system would be very greatly increased, as an extremely large number of tokens would need to be managed and replicated. Processing would be demanding and also extremely expensive, as existing EMV key generation approaches require customised rather than off-the-shelf Hardware Security Modules (HSMs), and data storage and particularly network latency would become impossible to manage problems.

This distributed approach is supported by replacing the binding of a token to a specific hierarchically derived key, allowing instead the first available key from a stack of keys to be allocated to a tokenized transaction. This approach, using flexible and dynamic key management, allows for a scalable solution. Monitoring can be carried out in such a way as to ensure that the distributed architecture is secure without requiring the transmission or replication of large quantities of sensitive information. This approach can also be carried out in a standard HSM using fully FIPS compliant processes - for example, DES and 3DES need not be used. This approach is described in more detail below.

At present, the device security model is also used by the present applicant for fully digital transactions. This security model involves Issuer Master Keys (IMKs) being stored in the transaction system HSMs and used to derive Card Master Keys (CMKs) from the relevant IMK and a card PAN (Primary Account Number). These CMKs are then stored in a device (typically a Secure Element or substitute technology). When using software-based solutions to generate transaction credentials using a mobile device, a Session Key (SK) is generated using the relevant CMK and an ATC (Application Transaction Counter) for the card/device - this is currently generated by the Credentials Management System (CMS) as shown in Figure 7. At present, all tokens, even for fully digital transactions, are bound to this IMK/CMK/SK derivation. This also applies for transaction credentials generated by server through API exposed by the transaction system for remote payment transactions.

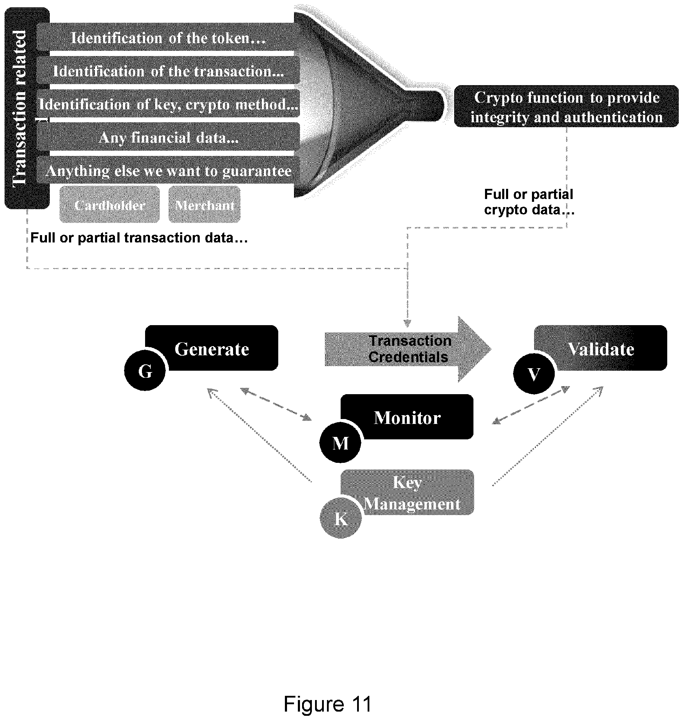

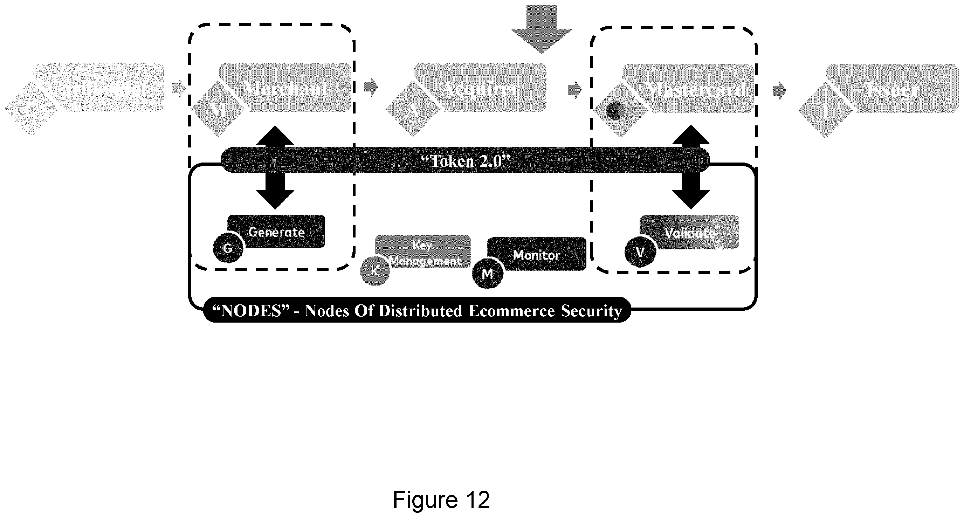

This approach requires a very heavy management load for keys, which is not appropriate for fully digital transactions, as is discussed below with reference to Figures 11 and 12. Generation of SKs, and hence Application Cryptograms (AC - a standard mechanism in EMV transactions) requires multiple cryptographic operations, not all of which can be carried out by a conventional off the shelf HSM, so bespoke HSMs are required. Massive distribution of keys across the system is required so that performance of a transaction can be supported wherever it occurs, and ATC management is complex. It would be desirable to use standard HSMs, avoid massive key replication while having keys directly available for use, and to be able to provide a solution that limits the number of HSMs overall (as these typically support only a few thousand keys).

Much of this security is to provide assurance by appropriate prevention mechanisms even if there is the possibility of compromise at a system endpoint (for example, at the cardholder device). Aside from this, security has a limited role, as shown in Figure 11. The main purpose of the cryptographic function is to provide a guarantee - this covers both integrity of the data and authentication. The transaction related data protected by a cryptographic data includes identification of a transaction and the associated token, along with an indication of any cryptographic processes used and any relevant financial data (along with any other aspect of the transaction that needs to be guaranteed). This is represented by a transaction credential - this needs to be generated G and subsequently validated V, with these processes being monitored M to ensure overall system integrity and supported by a key management system K of some kind. The present disclosure relates to an approach to monitoring which is effective to address the consequences of erroneous or malicious action by appropriate detection, messaging and reaction - as will be described, this largely takes place separately from the actual performance of a transaction.

In the case of a fully digital transaction, these processes take place in a constrained environment where endpoint security is not an issue in the same way as with devices. As can be seen from Figure 12, in this domain the token does not reach either of the endpoints of the conventional transaction management system - the cardholder or the issuer. Instead, it operates across a merchant system or a payment service provider (PSP) and transaction scheme provider.

This approach allows for decentralisation of the credential system from a complex central server into a number of nodes providing services. These nodes will typically be geographically distributed but may extend over a number of data centres (for example, by use of a cloud infrastructure to achieve data sharing within a node). These nodes provide services - in relation to credentials, a generation service G and a validation service V - with defined rules for access control to the services. The merchant or PSP communicates with the generation service G to obtain credentials, which are then used in a standard authorisation process carried out over the payment network of the payment system, with the validating service V being called upon where necessary to validate the credential. These services have access to the computing infrastructure (HSMs, databases) of a node. Monitoring M and key management K services are also provided - these may be centrally organised or comprise a mix of central and local functionality.

In the above discussion, it is assumed that nodes have both a generation service G and a validation service V - this need not be the case. In the arrangement shown in Figure 7, nodes are shown which provide only generation or only validation services. Both of these arrangements may well occur.

Access control to services can be provided in an essentially conventional manner. A general set of controls can be defined for a node, with the possibility of local modification - for example, to meet local regulatory or other specific security requirements. This approach makes it easy to implement localised policies, for example, by constraining all traffic for a particular country to a particular set of nodes, or by taking other region- or market-specific actions. Access control can be performed at more than one level (for example, for individual services, but also for a node), and there may be specific rules or checks for specific service types. Access control is potentially very granular and may provide specific solutions in a versatile way - for example, it could be used to allow a given merchant to perform a maximum number of transaction credential generation operations during a defined time for a given token.

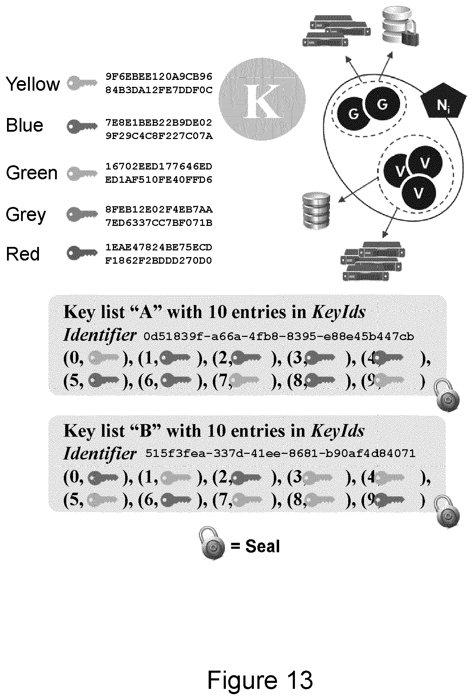

The key management mechanism shown in Figure 13 illustrates how a limited number of keys can be allocated to a node while providing a deterministic process in order to pick a key to generate credentials. The same process can be used by a validation entity to determine the key that was used by the generator so that it can validate any cryptographic material that is part of the credentials submitted for validation.

For each node, the generation G and validation V services have access to a pool of HSMs. The HSMs contain keys that are each uniquely identified by a set of key identifiers (**KeyId**). **KeyId** may be a label, a value, an explicitly unique value such as a UUID, or anything else with appropriate properties. These **KeyId** values are stored in uniquely identified (Identifier) key lists - these key lists provide a list of relationships between an identifier **(Id)** and a stored key **(KeyId)**. The identifiers **(Id)** are what will be determined by the deterministic process in order to establish what key is to be used, as will be described further below.

The integrity of each key list is guaranteed using a seal (Seal) - if the key lists are provisioned from a central location, this may be applied by a trusted party associated with that central location. Several other distribution models can be supported using for example a trusted party being a local functionality instead of a central location. A node will typically have a number of key lists available, but with only one active for generating credentials (G) at a given time - it will however generally be necessary for the validation service (V) to be able to access any key list that may be associated with a credential that is still valid. Key rotation in this approach is extremely straightforward - it may simply involve replacement of the active key list with another key list. It is however very straightforward to tell which **KeyId** is needed to validate a credential - it will be determined fully by the node identifier and the reference of the key list. That information is part of the credential and is used as input to the deterministic process to pick a key from a list of keys.

Figure 13 illustrates an exemplary arrangement for Node Ni, which has two generation services G able to generate credentials associated with transactions. At any given point in time, these services G will be required to use a given key list - say Key List A in the first instance. This uses the yellow and blue keys, so these keys must be loaded in the HSMs used by the generation services G. After the expiry of a period of time, the key rotation process may for example mandate the use of Key List B - this uses yellow and blue keys, but also the green key, so the green key must be loaded in the relevant HSMs if not already present. The specific key to be used is selected from the key list by a deterministic process - this will typically give a different result after key rotation, but this is not inevitably the case (for example, **Id**=3 or **Id**=6 would give the blue key before or after rotation). While the generation services G do not need Key List A after key rotation, the validation services V still do - they require access to any key list that relates to a potentially valid credential. The validation services V must be able to establish exactly which key was used to generate a credential by the generation services G in order to validate a credential.

The transaction related data to be protected cryptographically includes identification of the token associated with the transaction, but also identification of the transaction itself. For this, some kind of transaction identifier is required. At each node, the credential generation and validation services have access to a local database which can be used to manage such data. To ensure that transactions are managed effectively across the system, any generation of transaction credentials for a given token should be associated with a unique transaction identifier for each transaction. This may be a UUID or any appropriate identifier structure (such as a concatenation of an n bit node identifier, an e bit epoch time, and a c bit local counter).

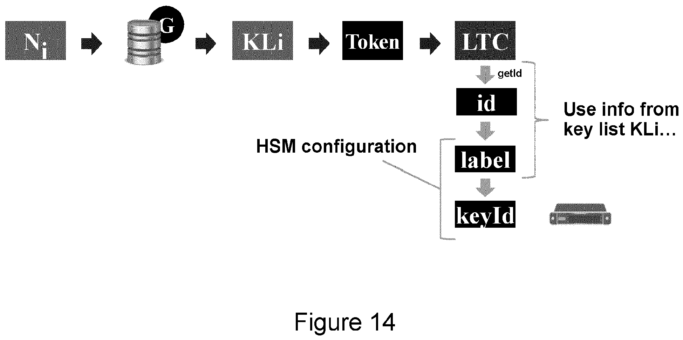

The size of data to be carried in transaction credentials could however be reduced to a few digits by use of a local transaction counter. This could simply be stored in the local database of a node and the local (rather than a global) value incremented when a local generation service G generates new transaction credentials for a token, a process shown in general terms in Figure 14.

An exemplary process for identifying a key to use for a transaction will now be described with reference to Figure 13. As indicated, at any given time a generation service G has access to a set of keys in local HSMs and uses keys in accordance with its currently active key list. This key list is itself uniquely identified (by *Identifier*) and contains a list of entries which correspond to relationships between an identifier **(Id)** and a stored key, represented by **KeyId**. In the case of Key List A, there are ten entries, and each **Id** is a single integer.

There will be a deterministic process associated with a key list to determine which key will be associated with a given transaction. It need not be the same deterministic process for every key list, but it needs to be used consistently for that key list so that both generation and validation services will achieve the same result. To provide this association, the deterministic process should operate on information identifying the transaction, such as some kind of transaction identifier - in this case, the local transaction counter (LTC) is a particularly effective choice as this is conveniently available and easy to process.

There are many choices available for a function, but the simplest choice is a MOD operation - for example here, **Id** = LTC MOD 10 would be appropriate to provide a deterministic result which could point to any of the available values of **Id.** Any validation service V with access to the transaction counter value in transaction data (or any counter derived from that value) can then determine the logical key identifier that was used by the generation service G that generated the credential and access the correct stored key without any trial and error mechanism. Associating the deterministic process function (referred to below as keyList.GetIdFunction, or **GetId**) to the attributes of a key list in this way allows a scalable solution that can accept any number of logical key identifiers for a given key list.

The HSM cryptographic function should be appropriate to ensure data integrity and authentication through credential generation and validation. The cryptographic function operates on the chosen transaction data, using the key, and provides an output which does not expose the key. Various alternative cryptographic functions could be used - HMAC is a particularly effective choice with several options regarding the hashing function, but CMAC, CBC MAC are among possible alternatives not even talking about solutions using asymmetric cryptography. The cryptographic function used should be specified in the key list (as *keyList.CryptoFunction*) and is also driven by the capabilities of the HSMs used for generation and validation. On-soil regulations, cryptographic material export or other security considerations may lead to the choice of specific cryptographic functions.

Within the transaction data, there should be information representative of the application cryptogram generated during the transaction process. This may be a reduced form of the cryptogram - for example, in legacy EMV transactions this may be provided as the CVC2 field. This is significant as a validation service V must be able to access all the data used by a generation service G to generate a cryptogram - this will include the following:

dynamic information carried as part of the transaction flow;
shared information from one of the following:

replicated processes (such as management of the key lists);
system parameters for particular use cases.

Different approaches can be used for difference transaction information formats - legacy transaction, UCAF and DPD field transactions. Legacy transaction use cases provide a solution when the Merchant and/or the PSP are only able to manage PAN, Expiry Date and CVC2 as part of the transaction flow, and do not have access to more recent developments. The UCAF use case aims to leverage the Universal Cardholder Authentication Field to carry more data as part of the transaction flow. The DPD use case covers the recently introduced Digital Payment Data, a container able to carry all the data needed as part of the transaction flow. As is noted below, the additional capabilities of formats such as UCAF can support embodiments of the disclosure in providing additional capabilities.

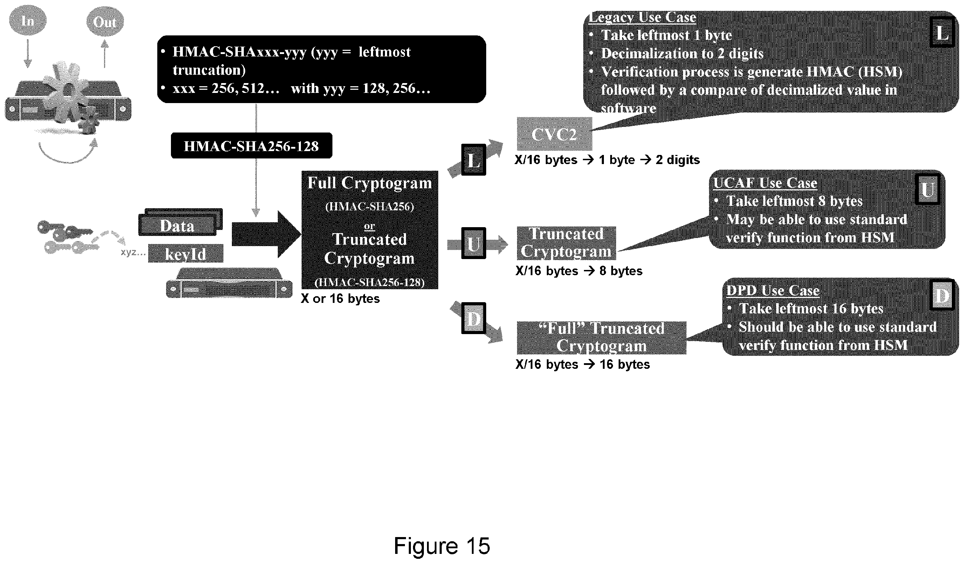

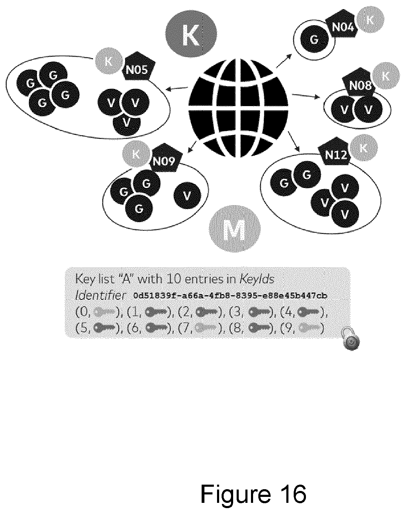

A full set of cryptographic mechanisms is shown in Figure 15. Key management is discussed with reference to Figure 16. There are two aspects to key management in this model: management of the keys themselves, including their generation and delivery to the HSMs associated with the nodes, and management of the key lists, including their generation, distribution, activation and deactivation. The key lists are sensitive assets while keys are considered as secret assets - the key lists define the keys to be used for generation and validation of cryptograms. Keys require end to end security with secure transport of the keys using wrapping/unwrapping techniques when loading the keys in HSMs. Their use should not be compromised by the key lists in case an attacker would like to change the content of a key list in order to alter the key selection process. The integrity of key lists is guaranteed by the seals - a seal is provided for a key list by the generating party or an associated trusted party, will involve a suitable cryptographic process (such as HMAC with an appropriate dedicated key or using for example a digital signature generated using asymmetric algorithms such as RSA, ECC, SM2...), and has the effect that any relevant part of the system can have confidence that the key list was generated by an appropriate party and has not been modified. In addition, the key list seals can be used in the generation and validation of cryptograms to secure the credentials.

Different control models are possible. There may be centralised control, with a central service generating keys and key lists, and distributing these to the different nodes. There however also may be localised control if dedicated processes are required at a particular node. This may in particular apply if there are specific requirements for a particular country - for example, on-soil regulations or restrictions on export of cryptographic material. This may also apply if there is a proprietary mechanism needed for HSM management - for example, with a particular cloud service provider. This need not be node-limited - it could apply to regional control with a central service within a region (this may be particularly appropriate where there is a specific security model for a particular country to meet local legal requirements). There may also be a hybrid or composite model, in which some key and key list provisioning is central, whereas some is local - there may also be a distributed model in which distributed peers together assume the role of a central service.

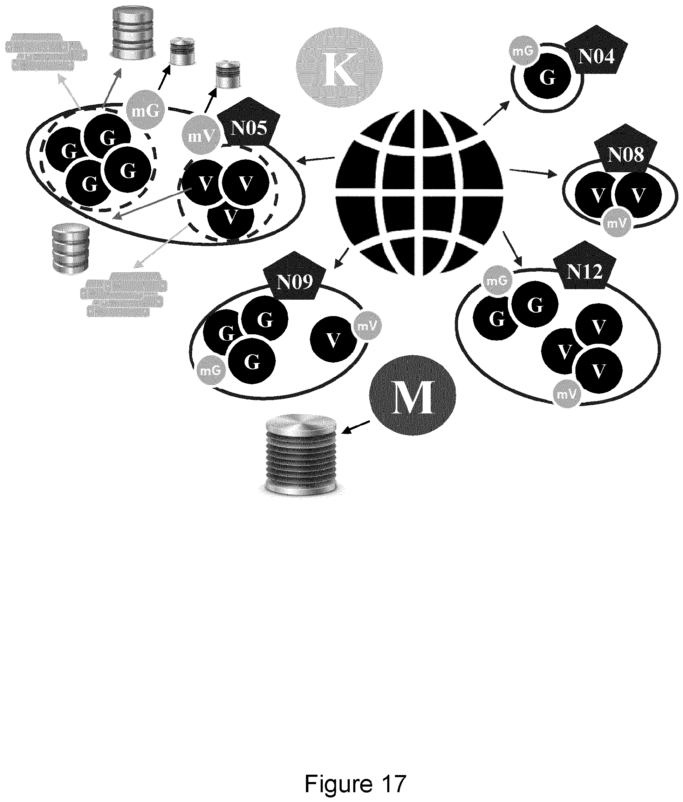

Monitoring is shown in general terms in Figure 17. Here, monitoring is complementary to security actions taken directly in a service to prevent fraud or misuse (such as the basic purpose of the service - generation of a credential using a cryptogram with subsequent validation). Such monitoring aims to detect security anomalies associated with a transaction - it can then trigger appropriate reaction mechanisms to contain any security risk and identify any attacker. In principle, this may have both local and central aspects. It is found that a hybrid approach is particularly effective in order both to provide effective detection of any issue and to produce reaction effective to counter risks associated with a fully distributed architecture.

There are three types of issue to be addressed by monitoring in such a system: integrity of the distributed system; generation of transaction credentials; and validation of transaction credentials. As transaction credentials may be generated or validated anywhere, it is important to have effective monitoring across the whole distributed system.

As described in, for example, the applicant's earlier WO 2022/250716 A1, recent versions of electronic transaction protocols can be used to carry more information than earlier protocols. Where the Universal Cardholder Authentication Field (UCAF) is available, a number of additional digits are usable. UCAF is a format type developed for Digital Secure Remote Payments (DSRP), a technology of the applicant adapted to bring EMV approaches - including the use of an application cryptogram - into effective use for online and other digital transactions through tokenisation. UCAF is used to carry the cryptographic data in the authorisation request. A UCAF data format will carry a predefined set of data objects in specific fields - between different UCAF data formats, the set of data objects may differ, as may the space allocated to different data objects.

UCAF Format 0 was developed initially, and is used by particular technologies of the applicant (for example, Mastercard Cloud-Based Payment, TEE-Based Payment and some varieties of Mobile PayPass). This format contains necessary cryptographic information (such as the application cryptogram, application transaction code and the unpredictable number) but no merchant binding. UCAF Format 0+ (used by later versions of Mastercard Cloud-Based Payment) expands this to inclusion of a card verification result, but still provides no merchant binding. UCAF Format 1 (used by MChip Mobile) also does not have any merchant binding, but does include a pin try counter result. Merchant binding is provided in UCAF Format 3, which comprises a merchant ID hash and also an approximate amount (this is used for newer versions of transaction protocols that require merchant binding). UCAF Format 3+ also includes a card verification result.

The UCAF is base 64 encoded when carried in the payment network - it is carried as a 28 character alphanumeric character string. It therefore needs to be base 64 decoded before processing.

One architecture that uses a very full set of capabilities is the DXD (Digital By Default) architecture for digital transactions for specific country environments. A particular UCAF format, UCAF Format 6, has been developed for this purpose with a very full set of capabilities - more cryptographic material can be used, a larger number of nodes can be used without node identification becoming a problematic issue because of limited available space in transaction data as defined in electronic transaction protocol requirements, and it may also be possible to rotate key lists more frequently than 24 hours, as there is the space to use more than one bit for key list identification for validation services. Additional features can be delivered leveraging the available space in transaction data, for example by supporting merchant locking techniques (when the transaction is effectively bound to a given merchant using some form of merchant identification), by including additional components in the cryptographic process such as by using some pseudo-random element or variable content between the generator and the validator, or by taking additional measures to provide full compliance with any regulatory requirements.

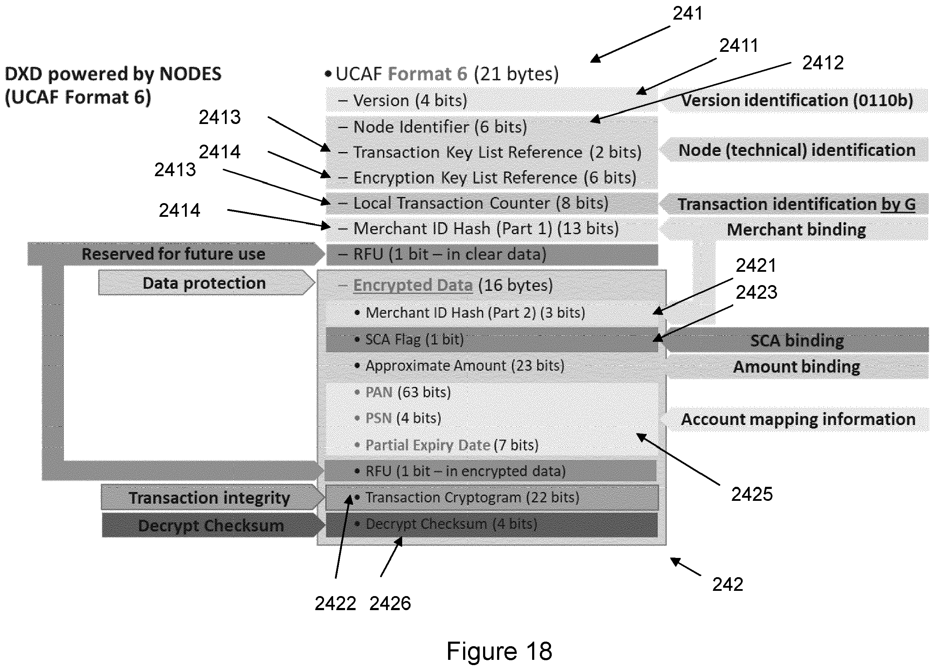

This UCAF Format 6 structure is shown in Figure 18. This is not an embodiment of the disclosure, but is shown here simply as a comparative of the type of data that can be carried in such a format, and how it can be carried. The UCAF Format 6 structure comprises an encrypted part 241 and an unencrypted part 242. The encrypted part 241 contains the credential (the cryptogram) and also certain transaction data, which allows certain elements to be held only in encrypted form. The unencrypted part 242 allows the transaction and its provenance to be identified.

In this example, the unencrypted part 241 contains 4 bytes of information that establishes the version, the node (and information related to the node), the transaction and certain merchant information. Version information 2411 is a 4-bit field allowing multiple versions of the format to be used. Information relating to the node includes a 6-bit node identifier 2412, and the key list references associated with the node - as indicated previously, these include a 2-bit transaction key list reference 2413 and a 6-bit encryption key list reference 2414. The transaction itself is identified by 1-byte of Local Transaction Counter (LTC) 2415. As described above, this information is sufficient to allow a node to perform validation (if permitted to do so) by regenerating the credential/cryptogram. Merchant binding to the token is provided by a Merchant ID Hash divided between a 13-bit unencrypted part 2416 and a 3-bit encrypted part 2421. Creation of the Merchant ID Hash is described in more detail below.

Use of encryption allows other transaction information to be held in encrypted form, but available in the future after decryption so that a transaction may be mapped to a PAN (Primary Account Number) without the need for maintaining a specific mapping database - other significant information such as PAN Sequence Number (PSN) can be held in this way. The encrypted data 242 comprises 16 bytes of data, the first three bits of which is the encrypted part 2421 of the Merchant ID Hash as identified above. The cryptogram 2422 forms another 22 bits of the encrypted data. One bit is used as an SCA Flag 2423 to indicate whether Strong Customer Authentication is used for the transaction. A further 23 bits are used for approximate transaction amount 2424 - these can be coded in the form

$$\text{Reconstructed Amount} = A * 2^B$$

where A is used for the leftmost 18 bits and B for the rightmost 5 bits. Another 74 bits relate to card information 2425. This includes the PAN (63 bits) and the PSN (4 bits, which is sufficient for one digit value) which can be provided in full. 7 bits are used to carry expiry date information - this therefore needs to be a partial expiry date, which is discussed below- the embodiment described below also supports delivery of the partial expiry date being optional at time of generation of the transaction credentials. A further element in the encrypted data in this case is a checksum 2426.

The Merchant ID may use the Remote Commerce Acceptor Identifier, which is a relatively new EMV field used to identify merchants (for example, by business website URL or reverse domain), if available. The Merchant ID Hash is provided in the following way:

- Merchant ID is provided as (by conversion or otherwise) a HEX value
- Buffer is created as follows

  ◦ Hash of Merchant ID (32 bytes)
  ◦ Approximate Amount (3 bytes left padded by Ob)
  ◦ Local Transaction Counter (coded on 2 bytes, left padded by Ob)

- Hash computed over buffer using appropriate crypto model
- Merchant ID Hash is first two bytes of hashed buffer

As noted above, in the embodiment provided here, the provision of an expiry date value is optional. If it is provided, then encoding and decoding activity will be carried out by the NODES system if it is valid - otherwise an error will be returned. If it is not provided, information must be carried that will prevent the system from returning an expiry date value in validation or decryption.

This information needs to be provided using the limited amount of space available - 7 bits - working from the Standard Expiry Date, which is coded over 4 digits (YYMM), though with practical constraints on the values for some fields (as there are only 12 months in a year and the year of expiry will not be far removed from the present year). This is exploited by first of all defining a "baseline" value for expiry date, which is simply provided as a parameter for the encryption key list. After this, one special value of 0 [0000000b] is determined for encoding of "no expiry date defined" (generate) - for this value, there should be no expiry date returned at the time of decoding (whether for validation or for any other decryption). All other values -1 [0000001b] to 127 [1111111b] - are simply used to indicate the number of months from the baseline value to the provided expiry date (on generation) to provide reliable decoding on validation or any other decryption. If a supplied expiry date is returned which is lower or equal to the baseline value, or exceeds 127 months after the baseline, this is invalid, and an error is returned. As noted above, the encrypted data also comprises a checksum. This is provided as in some circumstances it may be desirable to obtain assurance on decryption of the integrity of the data beyond that which is provided by validation of the cryptogram.

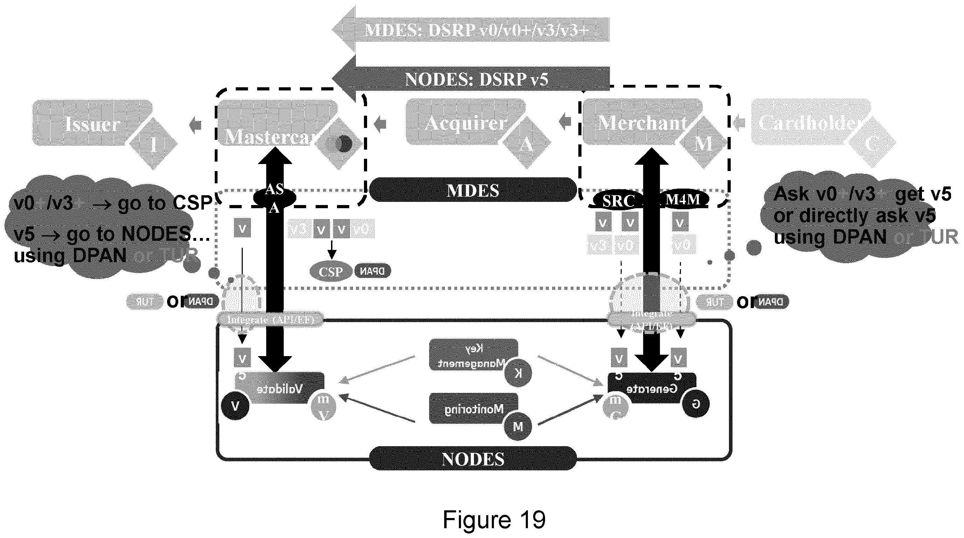

The UCAF Format 6 illustrated in Figure 18 indicates the types of information that can be carried if all relevant parties support such a format. However, the credential generation and validation infrastructure may in practice need to support service requests from a variety of parties using a number of different transaction flows and transaction types. In some cases, all parties will be able to support a structure of the type shown in Figure 18. In other cases, parties may only be able to support a much more limited information exchange. This situation is illustrated in Figure 19 - this illustrates a variety of cases that may need to be supported by the system. Whereas the NODES architecture is generally designed to operate using later UCAF formats - here UCAF Format 5 - earlier digital transaction solutions are more limited in their capabilities. Consequently, in order to use credential generation and validation with a NODES architecture, some solution other than UCAF Format 5 as currently existing needs to be found, as this format does not properly support these earlier architectures.

Figure 19 shows different routes for a digital transaction supported by the Mastercard Digital Enablement Service - as discussed earlier in the specification, this is used for online transactions and relies on card tokenisation. The token is here referred to as a digital Primary Account Number (DPAN), and in some architectures may be identified by a Token Unique Reference (TUR) rather than a DPAN. In pre-NODES digital architecture solutions, such as MDES for Merchants (M4) and Secure Remote Commerce (SRC), transaction and encryption keys are bound to the token, whereas in NODES, keys are bound to the node, rather than to the token. This means that there is a mismatch in information needed for the transaction between that carried in normal UCAF Format 5 (devised to carry the information required by NODES) and earlier formats (such as Format 0 or 0+, which can support M4M or SRC, or Format 3 or 3+, which can support SRC). As discussed above, Format 0 has no transaction binding, whereas Format 3 has merchant binding and supports strong customer authentication (and so is compatible with PSD2), with the + indicating presence of a card verification result.

A form of UCAF Format 5 has been developed that is constructed differently depending on what type of transaction that it needs to service. For example, for an M4M transaction, the NODES architecture may be required to generate (and later validate) a credential, but in such a way that it has the elements of UCAF Format 0+.

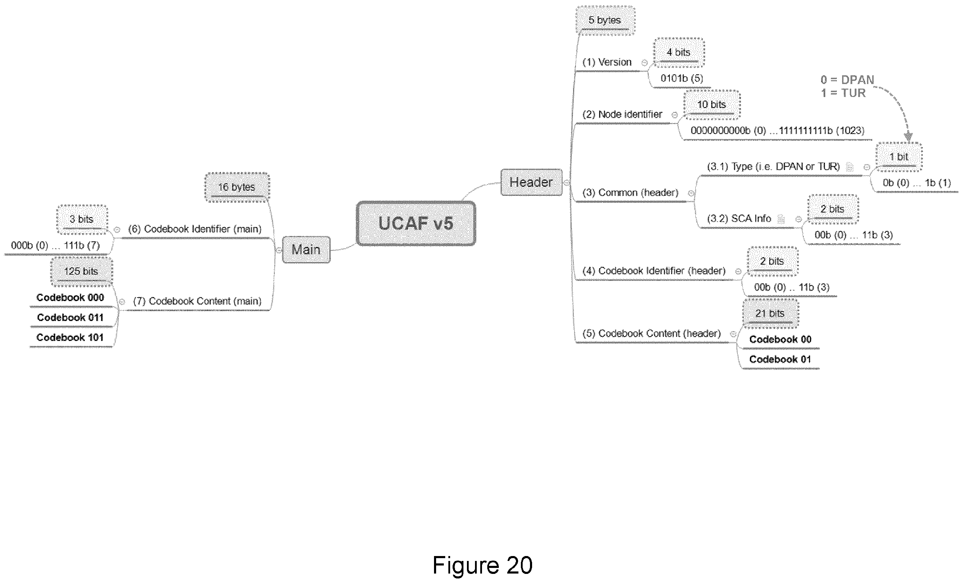

As can be seen in Figure 20, this is achieved by a type of UCAF Format 5 which can adopt a variety of different subformats, with the subformat adopted identified by a suitable code. These subformats contain different information in different structures to support transactions of different types. The UCAF Format 5 consists of 21 bytes of hexadecimal encoded in base 64 - this is carried in an ISO8583 message (the ISO standard for financial transaction card originating messaging, used for authorisation messages by most transaction system providers) in Data Element 104 (DE104), a field reserved for transaction description, specifically in DE104SE1001. This applies to all UCAF formats, with the format version being coded in the leftmost 4 bits for Digital Secure Remote Payment (DSRP) via MDES. This UCAF Format 5 information is organised differently depending on the needs of the client requesting the service - in the example indicated above, by providing a form of UCAF Format 5 that can be used by the requesting client (which requires the information provided by UCAF Format 0+) while still meeting the requirements of the NODES architecture. This can be achieved by using a codebook approach - a code value in the UCAF Format 5 indicates the subformat that will be employed (here, one with the information carried by UCAF Format 0+), and the codebook will indicate the subformat that is associated with that code, and which carries the correct set of information.

In this form of UCAF Format 5, the 21 bytes of the message are divided into a 5 byte header containing technical data (and always in clear) and a 16 byte main body containing transaction data (which may be either clear or encrypted according to implementation). The exemplary codebook provided here allows for 32 possible combinations - four headers and 8 main bodies. The technical data provided in the header can include such information as the version, the DPAN or TUR and SCA information, along with the node identifier, key list and transaction counter). The transaction data in the main body may include token PSN, amount and merchant binding, CDCVM information, initiation of the transaction (client or merchant), transaction type and transaction reference. The header enables identification of the information as UCAF Format 5 and provides the information needed to call the NODES service effectively. The main body provides everything needed for (secure) control of the transaction and allows for behaviour mimicking an "older" form of transaction if needed while allowing for a full set of capabilities if supported.

Using this approach, many different sets of requirements can be supported while using only one format- UCAF Format 5. Unique token identification can be achieved by using DPAN or TUR combined with token expiry date (and token PSN) - this is robust even for re-digitization processes. Presence of additional information allows for replay (same transaction credentials submitted for validation more than once) and double spending (same transaction credentials submitted to multiple validation services) detection at the time of validation. In additional to supporting the provision of earlier version suitable versions of Format 5 (here, versions 0, 0+, 3 and 3+), this Format 5 is fully adapted for compliance requirements (such as PSD2 and Token Assurance Framework requirements) - it supports SCA, can provide CDCVM information, and can provide both amount binding and merchant binding. Further capabilities can also be provided (for example, using the spaces identified as reserved for future use in the embodiments described below): for example, identification of transaction initiator (cardholder- CIT, or merchant - MIT); transaction type identification; and merchant or PSP reference. Using such reserved spaces allows new data to be carried if needed without impact on acquirers or data processors.

This UCAF Format 5 solution splits the UCAF into a 5 byte header in clear and a 16 byte main part, which may be clear or encrypted, with the codebook providing options for the header and main part within one format version. This approach can be used with DPAN or TUR, optimizes space for node identification, key list references and LTC values, therefore allowing keys to be rotated less often, and provides the possibility of adding a number of new capabilities now while reserving room for further new capabilities in the future.

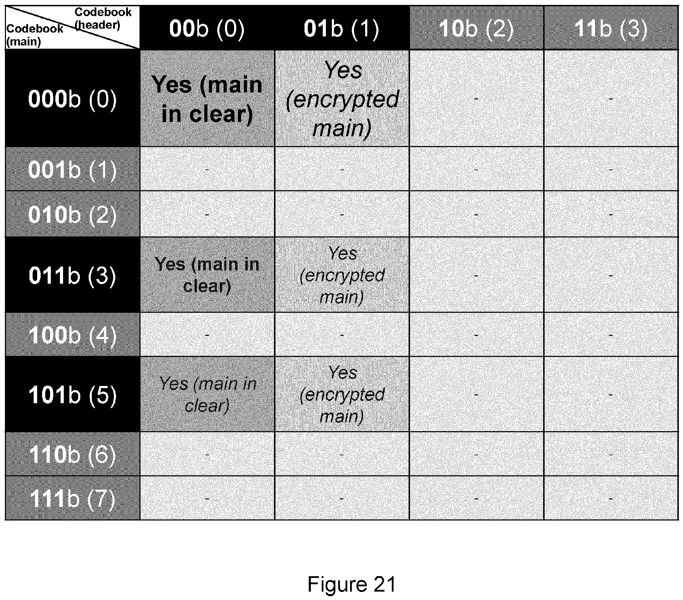

The main features of this UCAF Format 5 are shown in Figure 20, with a codebook summary shown in Figure 21. As shown in Figure 20, this UCAF Format 5 comprises a 5 byte header and a 16 byte main part. The header 2010 has five basic fields. The version field 2011 has 4 bits, and is here set to 0101 (5). The node identifier field 2012 has 10 bits, and so allows for 1024 nodes to be identified. The version field and the node identifier field will be used in message routing. The common header field 2013 comprises two subfields to identify particular information about the transaction - a first subfield 20131 identifies whether the token is identified by DPAN or by TUR - this is a single bit that is set to 0 for DPAN and 1 for TUR. The second subfield provides information about SCA (Strong Customer Authentication), as is required by PSD2 (for example) - this has 2 bits. The codebook identifier field 2014 has two bits - identifying four possible codebooks - and these have an associated codebook content field 2015 of 21 bits. The main part 2020 has a simpler basic structure: a 3 bit codebook identifier 2021 and an 125 bit codebook content field 2022. The usage of these fields will be described in more detail below.

Figure 21 shows the codebook combinations currently used: header 00 can be used with main 000 (replicating v0 and v0+), main 011 (replicating v3 and v3+) and main 101 (simply using v5) in each case with the main in clear, whereas header 01 provides the same options with the main encrypted. As can be seen, this approach leaves twenty-four header and main combinations still available.

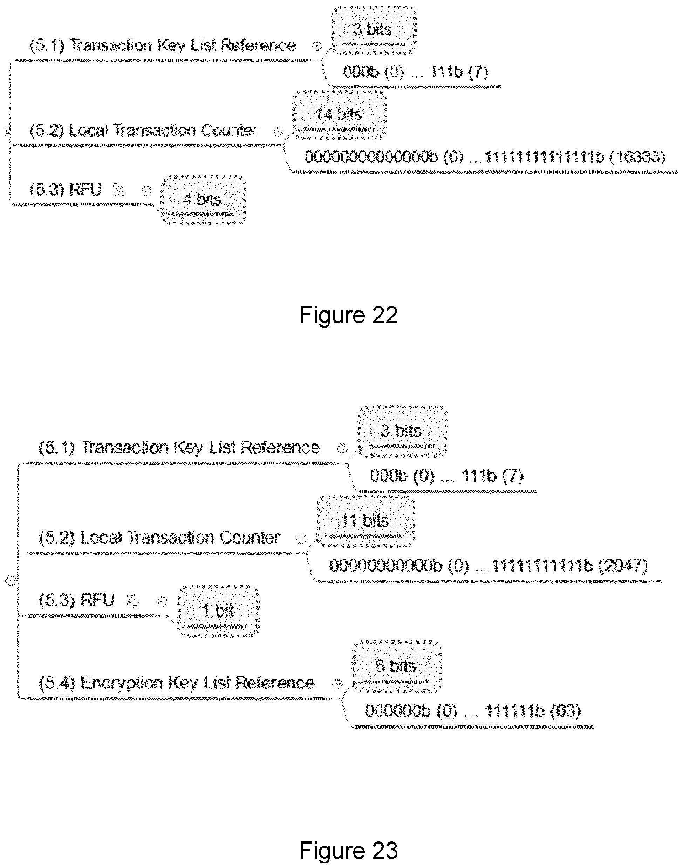

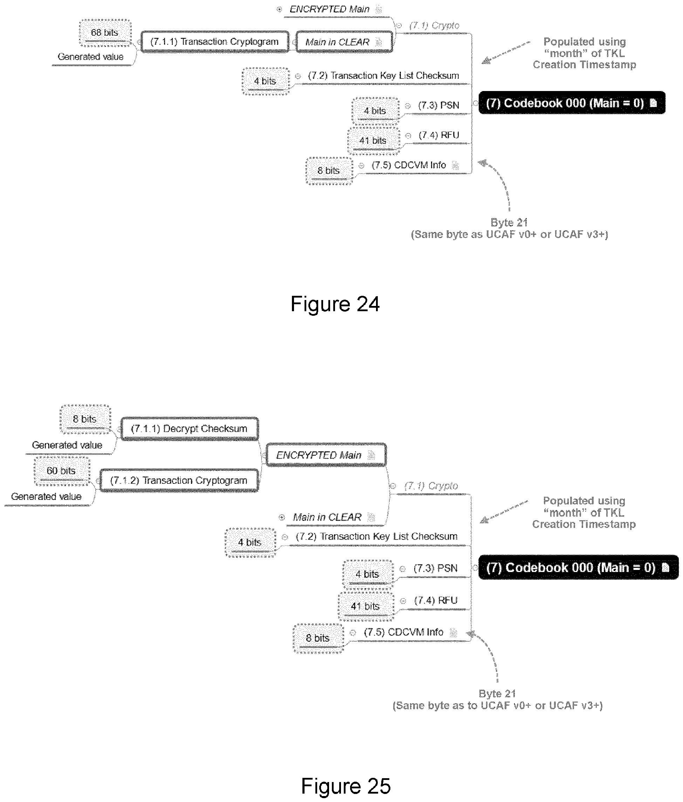

These eight codebooks - the two header codebooks and the six main codebooks currently used - are illustrated in Figures 22 to 29. Figures 22 and 23 are discussed immediately below. Figures 24 to 29 - which implement an embodiment of the disclosure - are described further below.

Figures 22 and 23 indicate the two codebook options used for the header - codebook 00 supports a main part in clear, whereas codebook 01 supports a main part that is encrypted. Both have three bits for a transaction key list reference - both also provide bits for a local transaction counter and bits reserved for future use, but codebook 01 also reserves 6 bits for an encryption key reference. Codebook 01 therefore provides fewer bits for the local transaction counter and for future use than codebook 00 (11 bits as opposed to 14 bits for the local transaction counter, and 1 bit as opposed to 4 bits reserved for future use).

A practical issue with both the UCAF Format 6 and UCAF Format 5 solutions, however, is that restricted room is available for key list rotation, and that the overly frequent key list rotation that results creates the risk of erroneous "use" of a transaction counter value when an "old" credential appears for validation with a correct key list value, leading to subsequent failure of validation for the current credential with that transaction counter value. This is the general case shown in Figure 3 above. Embodiments of the disclosure provide solutions involving a key list enhancement that greatly reduces or even eliminates this risk. Two different embodiments are described below, along with alternatives - these different embodiments are proposed for UCAF Format 6 and UCAF Format 5 respectively, and illustrate two types of enhancements described in relation to Figure 4: a mechanism to allow a longer key list cycle before a given key list recurs, and a check mechanism to prevent clashes from arising before a transaction counter value is marked as used.

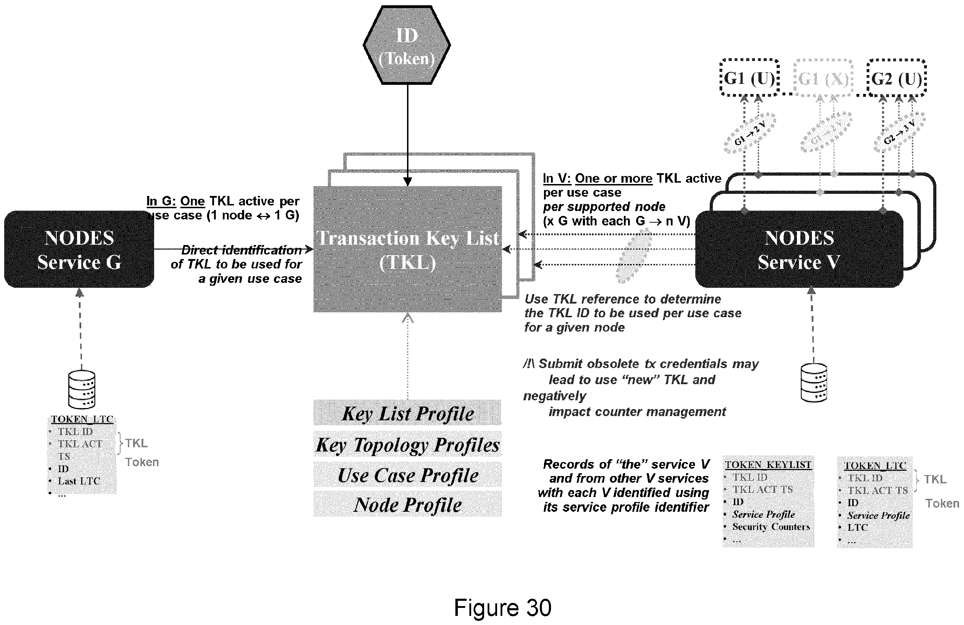

For convenience, issues relevant to key list rotation are summarized in Figure 30. A transaction is carried out for a tokenised identifier using a current transaction key list. For generation of a credential, there will be one transaction key list active at any given time. They key list is defined by a number of profiles (key list, key topology, use case, node...) and Service G operates on the token to generate a credential, with local transaction counter (LTC) value one of the elements used in the generation of the credential. Validation occurs subsequently by an instance of Service V - there may be more than one transaction key list active at a given time, as there is a validation time window during which validation can legitimately occur. When this window ends, the transaction key list used for generation becomes invalid for a period. However, as key lists are rotated to prevent uncontrollable key expansion, there will come another period during which the transaction key list becomes available for use again - this is the period when an attempt to validate an obsolete credential can lead to subsequent failure to validate a legitimate, in-time credential as a perceived replay attack.

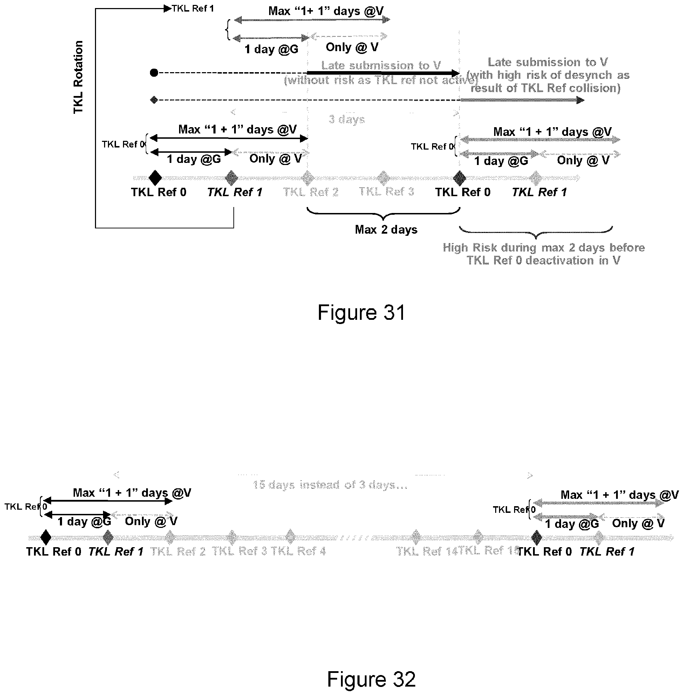

For use case X, using UCAF Format Version 6, the problem is set out in Figure 31, and the solution using an embodiment of the disclosure is set out in Figure 32. The position for UCAF Format Version 6 is quite challenging, as there is very limited space available - only 8 bits are available for the LTC, and only 2 bits - (four values) are available for the transaction key list (TKL). If the TKL is rotated daily, then the same key list (the same TKL Reference value) will appear after only three days. This means that half the time the conditions exist for an LTC value "clash", with the risk being greatest in the fourth and fifth day after credential generation.

A practical solution here is to provide a key list enhancement that extends the time period before a key list will recur- this can be done by finding additional bits to use or repurpose in the UCAF Format Version 6 structure so that larger Key List Reference values can be accommodated. As shown in Figure 32, if two bits can be released then Key List Reference can take on 16 values rather than 4, very significantly reducing the risk of a problematic LTC clash. Other options are possible (using a bit from the node identifier, therefore reducing the number of nodes available, or using one or more bits to establish a further identifier or other distinguishing factor, and using this as a way to prevent clashes), but it is not immediately clear that these will be as effective.

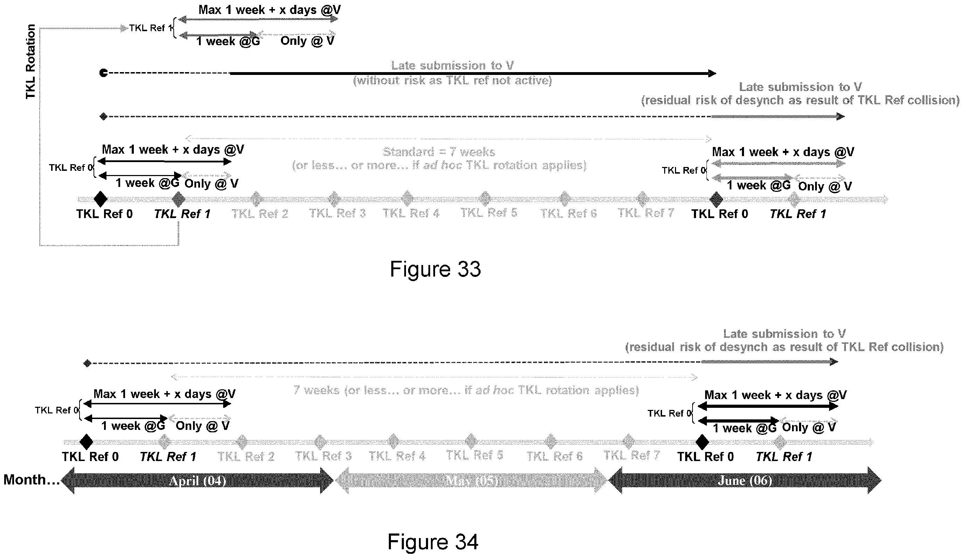

For use case U, delivered in UCAF Format Version 5, there is more space available and consequently an opportunity to eliminate this problem for practical purposes with an appropriate key list enhancement. Figure 33 shows the current case - LTC is carried using 14 bits (16384 values) and three bits are used for TKL reference (8 values). Moreover, for this use case, while daily key rotation is possible, the nature of the use case means that weekly TKL rotation is the most effective practical model, because of the low exposure of the key list outside the NODES system. This means that a TKL reference is only reused after 7 weeks.

As indicated in the earlier discussion of UCAF Format Version 5, there are a numbers of places where there are bits available: 1-4 bits in the codebook header; 1 bit to several bytes in the codebook main; with the further possibility of removing bits from other fields where definition could be reduced. Extending the TKL reference is a possibility, but here there is a better practical solution - also record some or all of the time of creation of the TKL generation, and use this to check the credential as part of the initial matching process. This is shown in Figure 34 where the month of TKL usage in generation is recorded - a month value can be recorded with 4 bits of information, and it is possible to obtain these from codebook main in all cases. Figure 34 shows an attempt to submit a credential for validation with TKL Ref 0, but the submission is in month 06 (June) whereas the original generation was in month O4 (April). The validation service rejects the credential directly on the basis of the month mismatch (even though there is a key list match) and the rejection occurs without compromising a credential with the same LTC value generated in June using TKL Ref 0. The risk reduces to that arising from transaction credentials submitted one year later - this is a minimal risk. This could be done with weeks rather than months - with additional logic, a deliberate mismatch with the TKL rotation can allow weeks to be numbered individually with only 3 bits - however, the additional logical demand and the slightly earlier recurrence of a clash render this approach less attractive overall.

This strategy - which can be considered provision of a "TKL checksum" - is used in the main parts of UCAF Format Version 5 as described below with reference to Figures 24 to 29.

Figures 24 and 25 provide a main part that replicates UCAF Format 0/0+ information, with Figure 24 providing the clear version and Figure 25 providing the encrypted version (codebook 000 in each case). Both main parts have the same structure for transaction related information, including reservation of a byte ("byte 21") for CDCVM information (for the 0+ format). They also both reserve 4 bits for a PAN Sequence Number (PSN) and 41 bits for future use. 4 bits are used for the Transaction Key List Checksum - sufficient to hold the month value (TKL Creation Timestamp). The difference is in how the transaction cryptogram is held - for the clear case, this is held as a 68 bit value, whereas for the encrypted case, this is held as a 60 bit value with 8 bits reserved for a decrypt checksum.

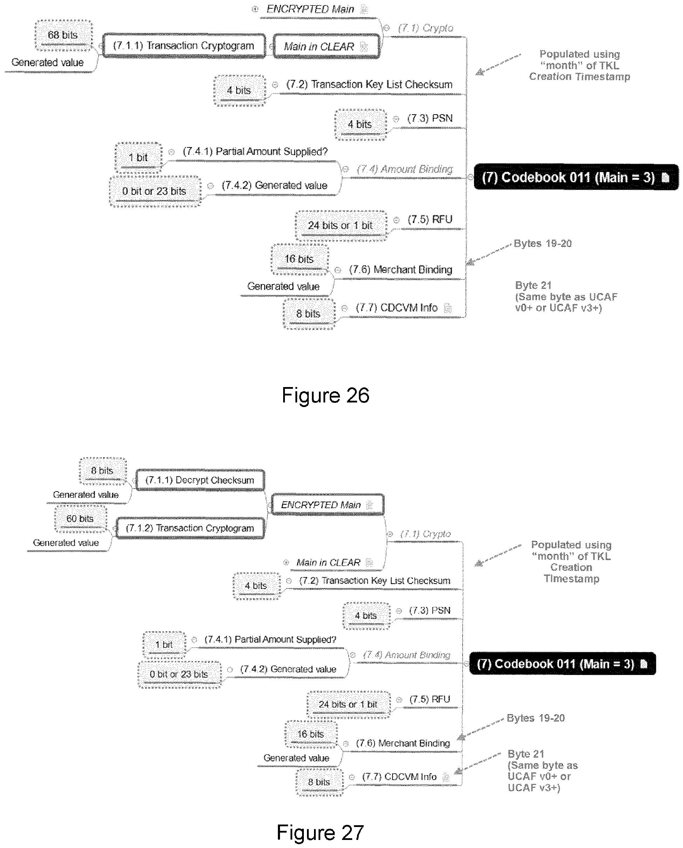

Figures 26 and 27 provide a main part that replicates UCAF Format 3/3+ information, with Figure 26 providing the clear version and Figure 25 providing the encrypted version (codebook 011 in each case). As before, both main parts have the same structure for transaction related information, though it is different from the Figure 24 and Figure 25 case. Here, there are 4 bits for PSN as before and 8 bits for CDCVM information including reservation of byte 21 for the + format. 4 bits are again used for the Transaction Key List Checksum. However, this time there is also an amount binding field (with a one-bit subfield to indicate whether a partial amount has been supplied, with 0 or 23 bits for a generated value) and a 16 bit merchant binding field (bytes 19 and 20 of the field) - there are either 24 or 1 bits reserved for future use depending on whether a value is needed for the amount binding field. This allows UCAF Format 3/3+ replication. The holding of the cryptogram is as for the Figure 24 and Figure 25 case - for the clear case, this is held as a 68 bit value, whereas for the encrypted case, this is held as a 60 bit value with 8 bits reserved for a decrypt checksum.

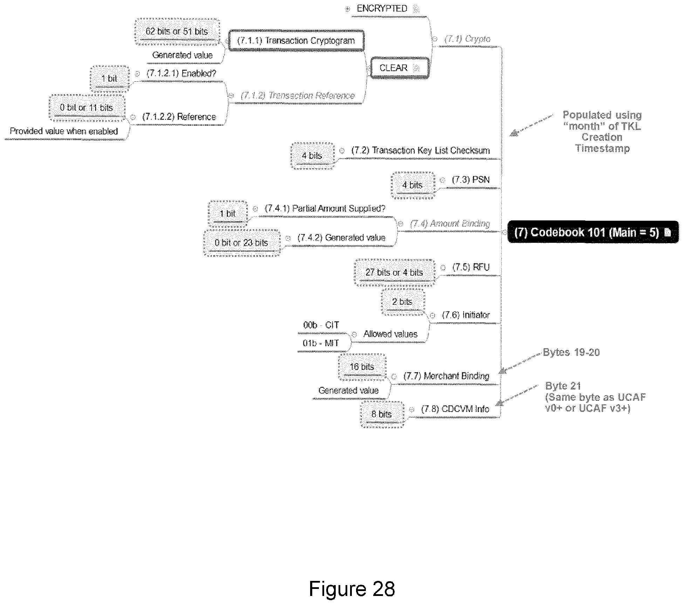

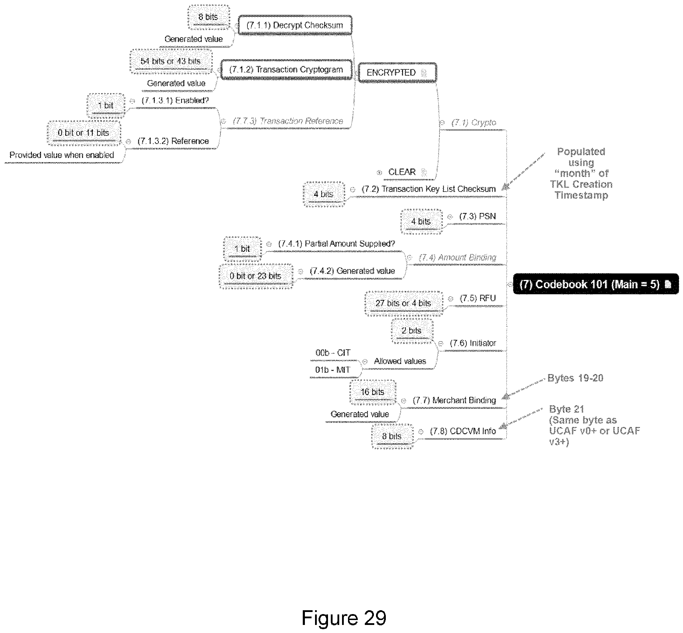

Figures 28 and 29 provide a main part with a "native" UCAF Format 5, with Figure 28 providing the clear version and Figure 29 providing the encrypted version (codebook 101 in either case). As before, 4 bits are reserved for the Transaction Key List Checksum. This approach allows for new information to be carried. In the main part, compared to the Figure 26 and Figure 27 case there is a new field provided for the transaction initiator (2 bits, with codes for CIT and MIT as the allowed values) and a new 7 bit field for transaction type. This can be implemented using the first two digits of the transaction processing code set out in ISO8583:1987 - this can be coded effectively with 7 bits, though the number of bits could be reduced further by using a translation table

In embodiments, these two strategies can be combined - a key list enhancement may comprise release of additional bits to extend the key list reference and thereby extend the time before a key list is reused, along a with a check field indicating a time of key list generation as discussed above.

As the skilled person will appreciate, the embodiments described above are exemplary, and further embodiments falling within the spirit and scope of the disclosure may be developed by the skilled person working from the principles and examples set out above. In particular, the embodiments described in detail above relate particularly to the generation and validation of credentials, and the encryption and decryption of those credentials with other data, where both the credentials and the other data are used in financial transactions. Generation and validation of credentials, and encryption of credentials with other data, in this way is not limited to financial transactions - this approach may be used in any distributed system where it is necessary for one party to confirm that a legitimate action has been taken by another party, where the two parties may be accessing different nodes of the distributed system.

## Claims

1. A method of providing a secure service at a computing node for a requesting party external to the computing node, wherein the computing node is one of a plurality of computing nodes in a distributed computing system adapted to provide the secure service, the method comprising at the computing node:

   receiving a service request from a requesting party, wherein the service request comprises a request to generate a credential;
   generating the credential using a cryptographic key and an instance counter, wherein the cryptographic key is determined from a currently active key list of cryptographic keys for use by the computing node, wherein key lists are rotated to provide a new currently active key list at a predetermined rotation frequency, and wherein the instance counter is determined by a number of instances of performing the service within a predetermined time window;
   wherein the credential is provided such that a key list reference and an instance counter value can be determined from the credential without decryption;
   wherein the credential further comprises a key list enhancement, such that the key list enhancement is used to prevent clash between credentials having a common key list reference and a common instance counter value.

2. A method of providing a secure service at a computing node for a requesting party external to the computing node, wherein the computing node is one of a plurality of computing nodes adapted to provide the secure service, the method comprising at the computing node:

receiving a service request from a requesting party, wherein the service request comprises a request to validate a credential, wherein the credential has been generated using a cryptographic key and an instance counter by one of the computing nodes of the plurality of computing nodes, wherein the cryptographic key has been determined from a then currently active key list of cryptographic keys for use by the generating computing node, wherein key lists are rotated to provide a new currently active key list at a predetermined rotation frequency, and wherein the instance counter was determined by a number of instances of performing the credential generating service at the generating computing node within a predetermined time window;

wherein the credential is provided such that a key list reference and an instance counter value can be determined from the credential without decryption, and where the credential further comprises a key list enhancement to prevent clash between credentials having a common key list reference and a common instance counter value;

determining from at least the key list reference and the key list enhancement whether validation of the credential is legitimate, and if so, attempting to validate the credential.

3. The method of claim 1 or claim 2, wherein the key list enhancement provides an extension to the key list reference, thereby extending the time for a key list to recur on rotation at the predetermined rotation frequency.

4. The method of any preceding claim, wherein the key list enhancement comprises an extra field to check whether the key list reference relates to a usage of the relevant key list currently available for validation.

5. The method of claim 4, wherein the key list enhancement comprises a time.

6. The method of claim 5, wherein the key list enhancement comprises an indication of a month of generation of the credential.

7. The method of claim 5, wherein the key list enhancement comprises an indication of a week of generation of the credential.

8. The method of claim 5 or claim 6, wherein the predetermined rotation frequency of key lists is weekly.

9. Computing apparatus adapted to act as a computing node providing a secure service, the computing apparatus comprising a processor, a memory, and means for communicating over a network, wherein the memory comprises instructions to program the processor to perform the method of any preceding claim using the means for communicating over a network.

10. Computing apparatus according to claim 9, wherein the computing apparatus is adapted to perform both the method of claim 1 and the method of claim 2.

11. A distributed computing system comprising a plurality of instances of computing apparatus as claimed in claim 9 or claim 10, each such computing apparatus acting as a computing node for providing a secure service as part of the distributed computing system.

Figure 1

Figure 2

Figure 3

Figure 4

Figure 5

Figure 6

Figure 7

Figure 8

Figure 9

Figure 10

Figure 11

Figure 12

Yellow 9F6EBEE120A9CB96
84B3DA12FE7DDF0C

Blue 7E8E1BEB22B9DE02
9F29C4C8F227C07A

Green 16702EED177646ED
ED1AF510FE40FFD6

Grey 8FEB12E02F4EB7AA
7ED6337CC7BF071B

Red 1EAE47824BE75ECD
F1862F2BDDD270D0

**Key list "A" with 10 entries in *KeyIds***
***Identifier*** 0d51839f-a66a-4fb8-8395-e88e45b447cb
(0,    ), (1,    ), (2,    ), (3,    ), (4,    ),
(5,    ), (6,    ), (7,    ), (8,    ), (9,    )

**Key list "B" with 10 entries in *KeyIds***
***Identifier*** 515f3fea-337d-41ee-8681-b90af4d84071
(0,    ), (1,    ), (2,    ), (3,    ), (4,    ),
(5,    ), (6,    ), (7,    ), (8,    ), (9,    )

= Seal

# Figure 13

$N_i$ → G → KLi → Token → LTC

getId

id

Use info from
key list KLi...

HSM configuration

label

keyId

Figure 14

Figure 15

Figure 16

Figure 17

**Figure 18**

EP 4 440 029 A1

MDES: DSRP v0/v0+/v3/v3+

NODES: DSRP v5

Issuer — I

Mastercard

Acquirer — A

Merchant — M

Cardholder — C

AS A

MDES

SRC M4M

v0 /v3 → go to CSP

v5 → go to NODES... using DPAN

Ask v0 /v3 get v5 or directly ask v5 using DPAN

CSP DPAN

DPAN or TUR

DPAN or TUR

Integrate (API/...)

Integrate (API/...)

Key Management — K

Monitoring — M

Validate — V

Generate — G

NODES

Figure 19

Figure 20

| Codebook (main) \ Codebook (header) | 00b (0) | 01b (1) | 10b (2) | 11b (3) |
|---|---|---|---|---|
| 000b (0) | Yes (main in clear) | Yes (encrypted main) | - | - |
| 001b (1) | - | - | - | - |
| 010b (2) | - | - | - | - |
| 011b (3) | Yes (main in clear) | Yes (encrypted main) | - | - |
| 100b (4) | - | - | - | - |
| 101b (5) | Yes (main in clear) | Yes (encrypted main) | - | - |
| 110b (6) | - | - | - | - |
| 111b (7) | - | - | - | - |

Figure 21

(5.1) Transaction Key List Reference

3 bits

000b (0) ... 111b (7)

(5.2) Local Transaction Counter

14 bits

00000000000000b (0) ...11111111111111b (16383)

(5.3) RFU

4 bits

## Figure 22

(5.1) Transaction Key List Reference

3 bits

000b (0) ... 111b (7)

(5.2) Local Transaction Counter

11 bits

00000000000b (0) ...11111111111b (2047)

(5.3) RFU

1 bit

(5.4) Encryption Key List Reference

6 bits

000000b (0) ... 111111b (63)

## Figure 23

68 bits
Generated value

(7.1.1) Transaction Cryptogram

ENCRYPTED Main

Main in CLEAR

(7.1) Crypto

Populated using
"month" of TKL
Creation Timestamp

4 bits

(7.2) Transaction Key List Checksum

4 bits

(7.3) PSN

(7) Codebook 000 (Main = 0)

41 bits

(7.4) RFU

8 bits

(7.5) CDCVM Info

Byte 21
(Same byte as UCAF v0+ or UCAF v3+)

Figure 24

8 bits
Generated value

(7.1.1) Decrypt Checksum

ENCRYPTED Main

60 bits
Generated value

(7.1.2) Transaction Cryptogram

(7.1) Crypto

Main in CLEAR

Populated using
"month" of TKL
Creation Timestamp

4 bits

(7.2) Transaction Key List Checksum

4 bits

(7.3) PSN

(7) Codebook 000 (Main = 0)

41 bits

(7.4) RFU

8 bits

(7.5) CDCVM Info

Byte 21
(Same byte as to UCAF v0+ or UCAF v3+)

Figure 25

Figure 26

Figure 27

Figure 28

Figure 29

Figure 30

Figure 31

Figure 32

Figure 33

Figure 34

EP 4 440 029 A1

Europäisches
Patentamt

European
Patent Office

Office européen
des brevets

# EUROPEAN SEARCH REPORT

Application Number

**EP 23 16 4771**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/329409 A1 (COLLINGE MEHDI [BE] ET AL) 13 October 2022 (2022-10-13) <br> * paragraph [0007] – paragraph [0014] * <br> * paragraph [0071] – paragraph [0142]; figures 8, 13, 22,23 * <br> ----- | 1-11 | INV. <br> H04L9/08 <br> H04L9/32 |
| X | WO 2021/173396 A1 (MASTERCARD INTERNATIONAL INC [US]) 2 September 2021 (2021-09-02) <br> * page 24, line 9 – page 30, line 2 * <br> * figures 22-25 * <br> ----- | 1-11 | |

TECHNICAL FIELDS SEARCHED (IPC)

H04L

The present search report has been drawn up for all claims

| Place of search | Date of completion of the search | Examiner |
|---|---|---|
| Munich | 4 September 2023 | Spranger, Stephanie |

EPO FORM 1503 03.82 (P04C01)

## ANNEX TO THE EUROPEAN SEARCH REPORT
## ON EUROPEAN PATENT APPLICATION NO.

EP 23 16 4771

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2023

| Patent document cited in search report | | Publication date | Patent family member(s) | | Publication date |
|---|---|---|---|---|---|
| US 2022329409 | A1 | 13-10-2022 | CN 113841206 A | | 24-12-2021 |
| | | | US 2022329409 A1 | | 13-10-2022 |
| | | | WO 2020247095 A1 | | 10-12-2020 |
| WO 2021173396 | A1 | 02-09-2021 | CN 115191102 A | | 14-10-2022 |
| | | | EP 3872733 A1 | | 01-09-2021 |
| | | | US 2023164122 A1 | | 25-05-2023 |
| | | | WO 2021173396 A1 | | 02-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020247092 A1
- EP 19178579
- WO 2022250716 A1